(19) Europäisches Patentamt
European Patent Office
Office européen des brevets

(11) EP 4 545 312 A1

(12) EUROPEAN PATENT APPLICATION
published in accordance with Art. 153(4) EPC

(43) Date of publication:
**30.04.2025 Bulletin 2025/18**

(21) Application number: **23827203.3**

(22) Date of filing: **20.06.2023**

(51) International Patent Classification (IPC):
***B60C 1/00*** *(2006.01)* ***B60C 5/14*** *(2006.01)*

(52) Cooperative Patent Classification (CPC):
**B60C 1/00; B60C 5/14**

(86) International application number:
**PCT/JP2023/022804**

(87) International publication number:
**WO 2023/249020 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.06.2022 JP 2022101011**

(71) Applicant: **SUMITOMO RUBBER INDUSTRIES, LTD.**
**Kobe-shi, Hyogo 651-0072 (JP)**

(72) Inventor: **KITAGO, Ryota**
**Kobe-shi, Hyogo 651-0072 (JP)**

(74) Representative: **TBK**
**Bavariaring 4-6**
**80336 München (DE)**

(54) **TIRE**

(57) Provided is a tire comprising a pair of sidewall rubbers, a carcass cord topping rubber, a breaker topping rubber, and an inner liner rubber, wherein at least one rubber of the above-described rubbers comprises a recovered carbon black, wherein at least one rubber member constituting the tire comprises an oil, and wherein, when a total amount, in g, of the recovered carbon black is referred to as A, and a total amount, in g, of the oil comprised in the tire is referred to as B, A and B satisfy the following inequality (1). It is an object of the present invention to improve durability.

$$(A/B) \times 100 > 1 \quad (1).$$

EP 4 545 312 A1

## Description

### TECHNICAL FIELD

The present invention relates to a tire.

### BACKGROUND ART

The needs for consideration for environment have been growing throughout all industries year by year. There have been efforts for reuse of used materials with respect to a tire. Regarding carbon black, carbon black obtained from pyrolysis of a used tire is known.

Patent Document 1 discloses that, regarding carbon black that is a high-end material, a hydroxyl group or a carboxyl group is supplemented on a surface of a recovered carbon black obtained from pyrolysis of a used tire and the recovered carbon black is used as a part of a usual carbon black.

### PRIOR ART DOCUMENT

#### Patent Document

Patent Document 1: EP 3173251 A

### SUMMARY OF THE INVENTION

### PROBLEM TO BE SOLVED BY THE INVENTION

It is an object of the present invention to provide a tire having improved durability using a recovered carbon black.

### MEANS TO SOLVE THE PROBLEM

The present invention relates to a tire below:

A tire comprising

a pair of sidewall rubbers arranged on both sides of a tread part,
a carcass cord topping rubber constituting a carcass that is arranged on the inner sides of the sidewall rubbers in a tire width direction,
a breaker topping rubber constituting a breaker that is arranged on the outer side of the carcass in a tire radial direction and on the inner side of the tread part, and
an inner liner rubber arranged on the inner side of the carcass in the tire radial direction,

wherein at least one rubber selected from the group consisting of the sidewall rubbers, the carcass cord topping rubber, the breaker topping rubber, and the inner liner rubber comprises a recovered carbon black,
wherein at least one rubber member constituting the tire comprises an oil, and
wherein A and B satisfy the following inequality (1),

$$(A/B) \times 100 > 1 \quad (1),$$

where A represents a total amount, in g, of the recovered carbon black comprised in the sidewall rubbers, the carcass cord topping rubber, the breaker topping rubber, and the inner liner rubber and B represents a total amount, in g, of the oil comprised in the tire.

### EFFECTS OF THE INVENTION

According to the present invention, a tire having improved durability using recovered carbon black can be provided.

BRIEF DESCRIPTION OF THE DRAWINGS

FIG. 1 is a schematic view showing a part of a cross section of a tire relating to one embodiment of the present invention taken along a tire meridian line (the upper right-side part of the cross section).

EMBODIMENT FOR CARRYING OUT THE INVENTION

The tire of the present invention is a tire comprising a pair of sidewall rubbers arranged on both sides of a tread part, a carcass cord topping rubber constituting a carcass that is arranged on the inner sides of the sidewall rubbers in a tire width direction, an inner liner rubber arranged on the inner side of the carcass in a tire radial direction, and a breaker topping rubber constituting a breaker that is arranged on the outer side of the carcass in the tire radial direction and on the inner side of the tread part, wherein at least one rubber selected from the group consisting of the sidewall rubbers, the carcass cord topping rubber, the breaker topping rubber, and the inner liner rubber comprises a recovered carbon black, wherein at least one rubber member constituting the tire comprises an oil, and wherein A and B satisfy the following inequality (1),

$$(A/B) \times 100 > 1 \quad (1),$$

where A represents a total amount, in g, of the recovered carbon black comprised in the sidewall rubbers, the carcass cord topping rubber, the breaker topping rubber, and the inner liner rubber and B represents a total amount, in g, of the oil comprised in the tire.

A mechanism by which durability of the tire is improved in the present invention is considered as follows, although the following consideration is not intended to be bound by any theory. That is, a recovered carbon black comprising a predetermined amount or more of ash is characterized in that the recovered carbon black is less likely to absorb oil. A rubber in which such a recovered carbon black is compounded has a low thermal diffusivity and is less likely to suffer thermal-oxidative degradation, so that it is considered that its durability is improved. Besides, since oil can move between members, in the present invention, at least one rubber of sidewall rubbers, a carcass cord topping rubber, a breaker topping rubber, and an inner liner rubber may comprise a recovered carbon black, and at least one rubber of the sidewall rubbers, the carcass cord topping rubber, the breaker topping rubber, and the inner liner rubber may comprise oil.

The right side of the inequality (1) is preferably 5.

It is considered that, by increasing an amount of the recovered carbon black relative to oil, the effects of the present invention are exhibited more.

The right side of the inequality (1) is preferably 6.

It is considered that, by increasing an amount of the recovered carbon black relative to oil, the effects of the present invention are exhibited more.

When a total thickness of the sidewall rubber, the carcass cord topping rubber, and the inner liner rubber at a position at which a width of the tire becomes maximum in a tire rotation axis direction is referred to as W, in mm, A, B, and W preferably satisfy the following inequality (2),

$$(A/B)/W \times 1000 > 5 \quad (2).$$

When a ratio of an amount of the recovered carbon black to a unit amount of the oil is equal to or greater than a certain amount with respect to the thickness of the members, it is considered that the effects of the present invention are exhibited more.

When a total thickness of the breaker topping rubber, the carcass cord topping rubber, and the inner liner rubber at a position on a tire equatorial plane is referred to as H, in mm, A, B, and H preferably satisfy the following inequality (3),

$$(A/B)/H \times 1000 > 6 \quad (3).$$

When a ratio of an amount of the recovered carbon black to a unit amount of the oil is equal to or greater than a certain amount with respect to the thickness of the members, it is considered that the effects of the present invention are exhibited more.

The at least one rubber comprising the recovered carbon black preferably comprises the oil as well.

When the recovered carbon black and the oil previously coexist in one rubber, it is considered that the effects of the present invention are more easily exhibited.

The at least one rubber comprising the recovered carbon black is preferably a carcass cord topping rubber.

Since the carcass cord topping rubber can adjoin any of the sidewall rubbers, the inner liner rubber, and the breaker topping rubber, it is considered that the effects of the present invention are easily exhibited.

A rubber comprising the recovered carbon black is preferably at least two rubbers selected from the group consisting of the sidewall rubbers, the carcass cord topping rubber, the breaker topping rubber, and the inner liner rubber.
Expansion of a range of rubbers which the effects of the present invention reach can be expected.
The rubber comprising the recovered carbon black is preferably at least three rubbers selected from the group consisting of the sidewall rubbers, the carcass cord topping rubber, the breaker topping rubber, and the inner liner rubber.
Expansion of a range of rubbers which the effects of the present invention reach can be expected.
The rubber comprising the recovered carbon black is preferably all of the sidewall rubbers, the carcass cord topping rubber, the breaker topping rubber, and the inner liner rubber.
Expansion of a range of rubbers which the effects of the present invention reach can be expected.
A rubber comprising the oil is preferably at least two rubbers selected from the group consisting of the sidewall rubbers, the carcass cord topping rubber, the breaker topping rubber, and the inner liner rubber.
Expansion of a range of rubbers which the effects of the present invention reach can be expected.
The rubber comprising the oil is preferably at least three rubbers selected from the group consisting of the sidewall rubbers, the carcass cord topping rubber, the breaker topping rubber, and the inner liner rubber.
Expansion of a range of rubbers which the effects of the present invention reach can be expected.
The rubber comprising the oil is preferably all of the sidewall rubbers, the carcass cord topping rubber, the breaker topping rubber, and the inner liner rubber.
Expansion of a range of rubbers which the effects of the present invention reach can be expected.
At least one rubber selected from the group consisting of the sidewall rubbers, the carcass cord toping rubber, the breaker topping rubber, and the inner liner rubber preferably comprises a filler, and when a total amount, in g, of fillers comprised in the sidewall rubbers, the carcass cord toping rubber, the breaker topping rubber, and the inner liner rubber is referred to as C, A and C preferably satisfy the following inequality (4),

$$(A/C) \times 100 > 1.0 \quad (4).$$

When an amount of the recovered carbon black in the filler is equal to or greater than a predetermined amount, it is considered that the effects of the present invention are exhibited more.
At least one rubber member constituting the tire preferably comprises a plasticizing agent other than oil, and when a total amount, in g, of plasticizing agents other than the oil which are comprised in the tire is referred to as D, A and D preferably satisfy the following inequality (5),

$$A/(A + D) \times 100 > 16.0 \quad (5).$$

When an amount of oil in a total amount of the oil and a plasticizing agent other than the oil is equal to or greater than a predetermined amount, it is considered that the effects of the present invention are exhibited more.

<Definitions>

Unless otherwise specified, a "size or the like of each part of a tire" is defined as a value specified in a standardized state where a tire is rim-assembled to a standardized rim, filled with air at a standardized internal pressure, and applied with no load.
The "standardized rim" is a rim, in a standard system including a standard on which the tire is based, defined for each tire by the standard. The standardized rim refers to, for example, a "standard rim" in applicable sizes described in "JATMA YEAR BOOK" in JATMA (Japan Automobile Tyre Manufacturers Association, Inc), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.). JATMA, ETRTO, and TRA are referred to in this order, and when an applicable size is found during reference to the standard, a standardized rim is based on that standard. Additionally, if the tire is not defined in the above-described standard system, the "standardized rim" refers to a rim having the smallest rim diameter and secondly having the narrowest rim width among rims that can be rim-assembled to the tire and retain internal pressure, that is, rims that do not cause air leakage between the rim and the tire.
A "standardized internal pressure" is an air pressure, in a standard system including a standard on which the tire is based, defined for each tire by the standard. The "MAXIMUM AIR PRESSURE" in JATMA, the "maximum value" described in the table "TIRE LOAD LIMITS AT VARIOUS COLD INFLATION PRESSURES" in TRA, or "INFLATION PRESSURE" in ETRTO is defined as the standardized internal pressure. Like the standardized rim, JATMA, ETRTO, and TRA are referred to in this order, and when an applicable size is found during reference to the standard, a standardized internal pressure is based on that standard. Additionally, in a case of a tire whose size is not defined in the standard, the standardized internal pressure refers to a standardized internal pressure (provided that the standardized internal pressure

is 250 kPa or more) for another tire size for which the standardized rim is described as a standard rim (and which is defined by the standard). Besides, in a case where a plurality of standardized internal pressures of 250 kPa or more are described, the standardized internal pressure refers to the minimum value among them.

A "standardized load" means a load defined in a standard system including a standard on which the tire is based. The standardized load refers to, for example, the "maximum value" described in the table "TIRE LOAD LIMITS AT VARIOUS COLD INFLATION PRESSURES" in TRA, "LOAD CAPACITY" in ETRTO, or "MAXIMUN LOAD CAPACITY" in JATMA. Like the standardized rim and the standardized internal pressure, JATMA, ETRTO, and TRA are referred to in this order, and when an applicable size is found during reference to the standard, a standardized load is based on that standard. Additionally, in a case of a tire whose size is not defined in the standard, the standardized load WL (kg) is calculated as follows,

$$WL = 0.000011 \times V + 175$$

$$V = \{(Dt/2)^2 - (Dt/2-Ht)^2\} \times \pi \times Wt$$

V: virtual volume of the tire, in $mm^3$
Dt: tire outer diameter, in mm
Ht: tire cross-sectional height, in mm
Wt: a tire cross-sectional width, in mm

A "recovered carbon black" refers to carbon black that is obtained from a pyrolysis process of a product comprising carbon black such as a used tire and the like, wherein a ratio of a mass of ash (ash content) which is a component that does not combust is 13% by mass or more when the product is subjected to oxidative combustion by heating in the air, using a thermal weight measurement method according to JIS K 6226-2:2003. That is, a mass (carbon amount) to be lost by the oxidative combustion is less than 87% by mass. The recovered carbon black is also referred to as a recycled carbon and may also be expressed by rCB. Besides, a carbon black that is obtained from a pyrolysis process and in which a ratio of ash content is less than 13% by mass is distinguished from recovered carbon black and is simply referred to as a pyrolytic carbon black in the present specification.

A "total amount (A) of recovered carbon black" means a total amount, in g, of recovered carbon black comprised in a sidewall rubber, a carcass cord topping rubber, a breaker topping rubber, and an inner liner rubber and is obtained by summing up amounts, in g, of recovered carbon black comprised in the respective rubbers.

A "total amount (B) of oil" means a total amount, in g, of oil comprised in a tire. Besides, at least one rubber member constituting the tire may comprise oil.

A "total amount (C) of a filler" means a total amount, in g, of fillers comprised in a sidewall rubber, a carcass cord topping rubber, a breaker topping rubber, and an inner liner rubber and is obtained by summing up amounts, in g, of fillers comprised in the respective rubbers.

A "total amount (D) of a plasticizing agent other than oil" means a total amount, in g, of plasticizing agents other than oil which are comprised in a tire. Besides, at least one rubber member constituting the tire may comprise a plasticizing agent other than oil.

A "total thickness W" refers to a total thickness, in mm, of a sidewall rubber, a carcass cord topping rubber, and an inner liner rubber at a position at which a width of a tire becomes maximum in a tire rotation axis direction. After a tire is cut along a surface including a rotation axis, the total thickness W is measured in a state where this tire is held by a standardized rim. For example, W in FIG. 1 corresponds to the total thickness W. Besides, a thickness $W_S$, in mm, of the sidewall rubber, a thickness Wc, in mm, of the carcass cord topping rubber, and a thickness $W_{IL}$, in mm, of the inner liner rubber, are measured in the same manner as well.

A "total thickness H" refers to a total thickness, in mm, of a breaker topping rubber, a carcass cord topping rubber, and an inner liner rubber at a position on a tire equatorial plane. After a tire is cut along the tire equatorial plane, the total thickness H is measured in a state where this tire is held by a standardized rim. For example, H in FIG. 1 corresponds to the total thickness H. Besides, a thickness $H_B$, in mm, of the breaker topping rubber, a thickness $H_C$, in mm, of the carcass cord topping rubber, and a thickness $H_{IL}$, in mm, of the inner liner rubber, are measured in the same manner as well.

A "filler" refers to a reinforcing filler and comprises a usual carbon black as well as a recovered carbon black in the present invention. Furthermore, as a filler other than carbon black, silica or any of reinforcing fillers other than silica that are used in the tire industry are included. A specific example of the filler will be described later.

A "plasticizing agent other than oil" refers to a plasticizing agent other than oil, which is used in the tire industry, and a specific example of such a plasticizing agent will be described later.

<Measuring methods>

A "styrene content" is calculated by $^1$H-NMR measurement
A "vinyl bond amount (1,2-bond butadiene unit amount)" is measured by infrared absorption spectrometry.
A "weight-average molecular weight (Mw)" can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).
A "cis content (cis-1,4-bond butadiene unit amount)" is measured by infrared absorption spectrometry.
An "ash content of recovered carbon black" is measured by a thermal weight measurement method of JIS K 6226-2:2003.
A "$N_2$SA of carbon black" is a value calculated by JIS K 6217-2:2017.
A "$N_2$SA of silica" is a value measured by a BET method according to ASTM D3037-93.
Unless otherwise noted, a "softening point of resin or the like" is a temperature at which a sphere drops when the softening point specified in JIS K 6220-1:2015 is measured with a ring and ball softening point measuring device. A softening point measured by another method will be described accordingly.

<Tire>

The tire of the present invention will be described below with reference to the drawings as appropriate. However, the drawings merely show examples for explanation.
FIG. 1 is a schematic view showing a part of a cross section of a tire relating to one embodiment of the present invention taken along a tire meridian line (the upper right-side part of the cross section). In FIG. 1, a tire 1 comprises a pair of sidewall rubbers 3 arranged on both sides of a tread part 2, a carcass cord topping rubber 4 constituting a carcass that is arranged on the inner sides of the sidewall rubbers 3 in a tire width direction, a breaker topping rubber 5 constituting a breaker that is arranged on the outer side of the carcass cord topping rubber in a tire radial direction and on the inner side of the tread part 2, and an inner liner rubber 6 arranged on the inner side of the carcass cord topping rubber in the tire radial direction.
In the tire of the present invention, at least one rubber selected from the group consisting of the sidewall rubbers, the carcass cord topping rubber, the breaker topping rubber, and the inner liner rubber comprises a recovered carbon black. Moreover, at least one rubber member constituting the tire comprises oil. Here, the rubber comprising the recovered carbon black may be identical to or different from the rubber comprising oil. Moreover, the tire may be a form in which a recovered carbon black and oil are comprised in one rubber. Accordingly, at least one rubber comprising a recovered carbon black may comprise oil as well.
In a preferred embodiment, at least one rubber comprising a recovered carbon black is a carcass cord topping rubber. Moreover, in a preferred embodiment, at least one rubber comprising oil is a carcass cord topping rubber.
In a preferred embodiment, the rubber comprising the recovered carbon black is at least two rubbers selected from the group consisting of the sidewall rubbers, the carcass cord topping rubber, the breaker topping rubber, and the inner liner rubber, at least three rubbers selected from the above-described group, or all of the sidewall rubbers, the carcass cord topping rubber, the breaker topping rubber, and the inner liner rubber.
In a preferred embodiment, the rubber comprising oil is at least two rubbers selected from the group consisting of the sidewall rubbers, the carcass cord topping rubber, the breaker topping rubber, and the inner liner rubber, at least three rubbers selected from the above-described group, or all of the sidewall rubbers, the carcass cord topping rubber, the breaker topping rubber, and the inner liner rubber.
In a preferred embodiment, the carcass cord topping rubber adjoins the sidewall rubbers. In a preferred embodiment, the carcass cord topping rubber adjoins the inner liner rubber. In a preferred embodiment, the carcass cord topping rubber adjoins the breaker topping rubber.

(Regrading inequality (1))

In the tire of the present invention, when a total amount, in g, of the recovered carbon black comprised in the sidewall rubbers, the carcass cord topping rubber, the breaker topping rubber, and the inner liner rubber is referred to as A and a total amount, in g, of the oil comprised in the tire is referred to as B, A and B satisfy the following inequality (1),

$$(A/B) \times 100 > 1 \qquad (1).$$

Here, the right side of the inequality (1) is preferably 5, more preferably 6, further preferably 10, further preferably

30, further preferably 50, further preferably 60. On the other hand, an upper limit of the value on the left side of the inequality (1) may be, but not particularly limited to, usually about 150, about 120, or about 100.

(Regarding inequality (2))

In a preferred embodiment, when a total thickness of the sidewall rubber, the carcass cord topping rubber, and the inner liner rubber at a position at which a width of the tire becomes maximum in a tire rotation axis direction is referred to as W, in mm, A, B, and W satisfy the following inequality (2). In FIG. 1, W is a value obtained by summing up a thickness $W_S$, in mm, of the sidewall rubber, a thickness Wc, in mm, of the carcass cord topping rubber, and a thickness $W_{IL}$, in mm, of the inner liner rubber at the position at which a width of the tire becomes maximum in the tire rotation axis direction (where $W_S$, Wc, and $W_{IL}$ are not shown in the drawing),

$$(A/B)/W \times 1000 > 5 \quad (2).$$

Here, the right side of the inequality (2) is preferably 10, more preferably 13, further preferably 15, further preferably 30, further preferably 50, further preferably 70. On the other hand, an upper limit of the value on the left side of the inequality (2) may be, but not particularly limited to, usually about 250, about 200, or about 180.

(Regarding inequality (3))

In a preferred embodiment, when a total thickness of the breaker topping rubber, the carcass cord topping rubber, and the inner liner rubber at a position on a tire equatorial plane is referred to as H, in mm, A, B, and H satisfy the following inequality (3). In FIG. 1, H is a value obtained by summing up a thickness $H_B$, in mm, of the breaker topping rubber, a thickness $H_C$, in mm, of the carcass cord topping rubber, and a thickness $H_{IL}$, in mm, of the inner liner rubber at the position on the tire equatorial plane (where $H_B$, $H_C$, and $H_{IL}$ are not shown in the drawing),

$$(A/B)/H \times 1000 > 6 \quad (3).$$

Here, the right side of the inequality (3) is preferably 12, more preferably 14, further preferably 18, further preferably 36, further preferably 50, further preferably 70, further preferably 90, further preferably 100. On the other hand, an upper limit of the value on the left side of the inequality (3) may be, but not particularly limited to, usually about 300, about 250, or about 200.

(Regarding inequality (4))

In a preferred embodiment, at least one rubber selected from the group consisting of the sidewall rubbers, the carcass cord topping rubber, the breaker topping rubber, and the inner liner rubber comprises a filler. In this case, when a total amount, in g, of fillers comprised in the sidewall rubbers, the carcass cord topping rubber, the breaker topping rubber, and the inner liner rubber is referred to as C, A and C preferably satisfy the following inequality (4),

$$(A/C) \times 100 > 1.0 \quad (4).$$

Here, the right side of the inequality (4) is preferably 2.0, more preferably 2.2, further preferably 8.0, further preferably 12.0, further preferably 15.0. On the other hand, an upper limit of the value on the left side of the inequality (4) may be, but not particularly limited to, usually about 70, about 60, or about 50.

(Regarding inequality (5))

In a preferred embodiment, at least one rubber member constituting the tire comprises a plasticizing agent other than oil. In this case, when a total amount, in g, of plasticizing agents other than oil which are comprised in the tire is referred to as D, A and D preferably satisfy the following inequality (5),

$$A/(A + D) \times 100 > 16.0 \quad (5).$$

Here, the right side of the inequality (5) is preferably 30.0, more preferably 50.0, further preferably 70.0, further preferably 80.0, further preferably 90.0. On the other hand, an upper limit of the value on the left side of the inequality (5)

may be, but not particularly limited to, usually about 160, about 140, or about 120.

(Thicknesses $W_S$, $W_C$, $W_{IL}$, and W at tire maximum width position)

A thickness $W_S$, in mm, of a sidewall rubber, a thickness Wc, in mm, of a carcass cord topping rubber, and a thickness $W_{IL}$, in mm, of an inner liner rubber at a position at which a width of the tire becomes maximum in a tire rotation axis direction, and a total thickness W, in mm, that is a total of these thicknesses will be described.
$W_S$ is preferably larger than 1.5 mm, more preferably larger than 1.8 mm, further preferably larger than 2.1 mm. Moreover, $W_S$ is preferably smaller than 3.5 mm, more preferably smaller than 3.2 mm, further preferably smaller than 2.9 mm.
Wc is preferably larger than 0.5 mm, more preferably larger than 0.7 mm, further preferably larger than 0.9 mm. Moreover, Wc is preferably smaller than 2.0 mm, more preferably smaller than 1.7 mm, further preferably smaller than 1.4 mm.
$W_{IL}$ is preferably larger than 0.1 mm, more preferably larger than 0.5 mm, further preferably larger than 1.0 mm. Moreover, $W_{IL}$ is preferably smaller than 5.0 mm, more preferably smaller than 4.0 mm, further preferably smaller than 3.0 mm.
W is preferably larger than 2.1 mm, more preferably larger than 3.0 mm, further preferably larger than 4.0 mm. Moreover, W is preferably smaller than 10.5 mm, more preferably smaller than 8.9 mm, further preferably smaller than 7.3 mm.

(Thicknesses $H_B$, $H_C$, $H_{IL}$, and H at position on tire equatorial plane)

A thickness $H_B$, in mm, of a breaker topping rubber, a thickness $H_C$, in mm, of the carcass cord topping rubber, and a thickness $H_{IL}$, in mm, of an inner liner rubber at a position on a tire equatorial plane, and a total thickness H, in mm, that is a total of these thicknesses will be described.
$H_B$ is preferably larger than 1.5 mm, more preferably larger than 1.8 mm, further preferably larger than 2.1 mm. Moreover, $H_B$ is preferably smaller than 4.0 mm, more preferably smaller than 3.2 mm, further preferably smaller than 2.9 mm.
$H_C$ is preferably larger than 0.5 mm, more preferably larger than 0.7 mm, further preferably larger than 0.9 mm. Moreover, $H_C$ is preferably smaller than 2.0 mm, more preferably smaller than 1.7 mm, further preferably smaller than 1.4 mm.
$H_{IL}$ is preferably larger than 0.1 mm, more preferably larger than 0.5 mm, further preferably larger than 1.0 mm. Moreover, $H_{IL}$ is preferably smaller than 5.0 mm, more preferably smaller than 4.0 mm, further preferably smaller than 3.0 mm.
H is preferably larger than 2.1 mm, more preferably larger than 3.0 mm, further preferably larger than 4.0 mm. Moreover, H is preferably smaller than 11.0 mm, more preferably smaller than 8.9 mm, further preferably smaller than 7.3 mm.

<Rubber composition>

Rubber compositions constituting sidewall rubbers, a carcass cord topping rubber, a breaker topping rubber, and an inner liner rubber of the present invention will be described.

<Rubber composition for sidewall rubbers>

Each component of a rubber composition for sidewall rubbers will be described.

(Rubber component)

A rubber component preferably comprises an isoprene-based rubber (IR-based rubber) and a butadiene rubber (BR). In this case, the rubber component can comprise a rubber component other than the IR-based rubber and the BR. Moreover, the rubber component may be one consisting of an IR-based rubber and a BR. Explanation for each rubber that can constitute the rubber component is as follows.

<<Isoprene-based rubber>>

Examples of the isoprene-based rubber include a natural rubber (NR), an isoprene rubber (IR), a refined NR, a modified NR, a modified IR, and the like. As the NR, for example, those common in the tire industry can be used, such as

SIR20, RSS#3, TSR20, and the like. The IR is not particularly limited, and as the IR, for example, those common in the tire industry can be used, such as IR2200 and the like. Examples of the refined NR include a deproteinized natural rubber (DPNR), an ultra pure natural rubber (UPNR), and the like. Examples of the modified NR include an epoxidized natural rubber (ENR), a hydrogenated natural rubber (HNR), a grafted natural rubber, and the like. Examples of the modified IR include an epoxidized isoprene rubber, a hydrogenated isoprene rubber, a grafted isoprene rubber, and the like. The isoprene-based rubbers may be used alone, or two or more thereof may be used in combination.

<<BR>>

The BR is not particularly limited, and examples of the BR include those common in the tire industry, such as, for example, a BR having a high cis content, a BR containing a 1,2-syndiotactic polybutadiene crystal (SPBcontaining BR), a butadiene rubber synthesized using a rare-earth elementbased catalyst (a rare-earth-based BR), a tin-modified butadiene rubber modified by a thin compound (tin-modified BR), a modified butadiene rubber other than these BRs (modified BR), and the like. As a commercially available product of the BR, products manufactured by Ube Industries, Ltd., JSR Corporation, Asahi Kasei Corporation, Ltd., Zeon Corporation, etc. can be used. The modified BR may be a BR having a functional group interacting with a filler such as silica and the like. Examples of the modified BR include, for example, a terminal-modified BR obtained by modifying at least one terminal of a BR with a compound (a modifying agent) having the above-described functional group (terminal-modified BR having the above-described functional group at its terminal), a main chain modified BR whose main chain has the above-described functional group, a main chain terminal-modified BR having the above-described functional groups at its main chain and its terminal (for example, a main chain terminal-modified BR whose main chain has the above-described functional group and at least one terminal of which is modified with the above-described modifying agent), a terminal-modified BR which is modified (coupled) with a polyfunctional compound having two or more epoxy groups in a molecule and into which a hydroxyl group or an epoxy group is introduced, and the like. Examples of the above-described functional group include, for example, an amino group, an amido group, a silyl group, an alkoxysilyl group, an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, an epoxy group, and the like. Besides, these functional groups may have a substituent. Among them, an amino group (preferably an amino group whose hydrogen atom is substituted with an alkyl group having 1 to 6 carbon atoms), an alkoxy group (preferably an alkoxy group having 1 to 6 carbon atoms), and an alkoxysilyl group (preferably an alkoxysilyl group having 1 to 6 carbon atoms) are preferable.

A cis amount (cis content) of a BR is preferably greater than 90% by mass, more preferably greater than 93% by mass, further preferably greater than 95% by mass, further preferably 97% by mass or more. The cis amount of the BR can be measured by infrared absorption spectrometry.

As the BR, for example, products manufactured by Ube Industries, Ltd., JSR Corporation, Asahi Kasei Corporation, Ltd., Zeon Corporation, etc. can be used. The BR may be used alone, or two or more thereof may be used in combination.

<<SBR>>

The styrene-butadiene rubber (SBR) is not particularly limited, examples of which include, for example, an unmodified emulsion-polymerized styrene-butadiene rubber (E-SBR), an unmodified solution-polymerized styrene-butadiene rubber (S-SBR), and modified SBRs obtained by modifying these SBRs, such as a modified emulsion-polymerized styrene-butadiene rubber (modified E-SBR) and a modified solution-polymerized styrene-butadiene rubber (modified S-SBR), and the like. Examples of the modified SBR include a modified SBR modified at its terminal and/or main chain, a modified SBR coupled with tin, a silicon compound, etc. (a modified SBR of condensate or having a branched structure, etc.), and the like. Moreover, types of the SBR include an oil-extended type whose flexibility is adjusted by addition of an extending oil and a non-oil-extended type to which no extending oil is added, any of which can be used. As such an SBR, for example, products manufactured by Ube Industries, Ltd., JSR Corporation, Asahi Chemicals Co., Ltd., Zeon Corporation, ZS Elastomer Co., Ltd., etc. can be used. The SBR may be used alone, or two or more thereof may be used in combination.

A styrene content of an SBR is preferably greater than 15.0% by mass, more preferably greater than 20.0% by mass, further preferably greater than 23.0% by mass, from the viewpoints of rubber strength and grip performance. Moreover, the styrene content is preferably less than 40.0% by mass, more preferably less than 30.0% by mass, further preferably less than 25.0% by mass, from the viewpoint of fuel efficiency. Besides, the styrene content of the SBR is a value calculated by $^{1}$H-NMR measurement.

A vinyl content (1,2-bond butadiene unit amount) of an SBR is preferably greater than 10.0%, more preferably

greater than 15.0%, more preferably 18.0% or more, from the viewpoints of rubber strength and grip performance. Moreover, the vinyl content is preferably less than 80.0%, preferably less than 50.0%, more preferably less than 30.0%, from the viewpoint of fuel efficiency. Besides, the vinyl content of the SBR is a value measured by infrared absorption spectrometry.

<<Other rubber components>>

Other usable rubbers other than the above-described rubbers are not particularly limited, and rubbers used in the tire field and the like can be used as such other rubbers. Examples of the other usable rubbers include, for example, diene-based rubbers such as an acrylonitrile-butadiene rubber (NBR), a chloroprene rubber (CR), a styrene-isoprene-butadiene copolymer rubber (SIBR), and the like. These other rubbers may be used alone, or two or more thereof may be used in combination.

<<Content>>

A content of an IR-based rubber in 100% by mass of the rubber component is preferably greater than 5% by mass, more preferably greater than 10% by mass, further preferably greater than 20% by mass, further preferably greater than 30% by mass. On the other hand, the content is preferably less than 80% by mass, more preferably less than 70% by mass, further preferably less than 60% by mass, further preferably less than 50% by mass. When the content is within the above-described ranges, cut resistance tends to be improved.

Moreover, a content of a BR in 100% by mass of the rubber component is preferably greater than 15% by mass, more preferably greater than 30% by mass, further preferably greater than 40% by mass, further preferably greater than 50% by mass. On the other hand, the content is preferably less than 90% by mass, more preferably less than 80% by mass, further preferably less than 70% by mass, further preferably less than 60% by mass. When the content is within the above-described ranges, cut resistance tends to be improved.

Moreover, a total content of the IR-based rubber and the BR in 100% by mass of the rubber component is preferably greater than 80% by mass, more preferably greater than 90% by mass, further preferably greater than 95% by mass, or may be 100% by mass.

(Filler)

A filler can comprise a recovered carbon black (rCB). Moreover, the filler can comprise carbon black other than rCB, and silica. In a case where the filler comprises silica, the filler can further comprise a silane coupling agent. The filler can further comprise another filler other than carbon black and silica.

<<Content of carbon black>>

A total content of carbon black comprising a recovered carbon black when compounded based on 100 parts by mass of the rubber component is preferably greater than 30 parts by mass, more preferably greater than 40 parts by mass, further preferably greater than 50 parts by mass. On the other hand, the total content is preferably less than 150 parts by mass, more preferably less than 110 parts by mass, further preferably less than 80 parts by mass. When the content of carbon black is within the above-described ranges, a sufficient reinforcing property and a good dispersion in a rubber are obtained, so that a sufficient rubber strength and a sufficient crack growth resistance tend to be obtained.

A content of a recovered carbon black in a total content of carbon black is preferably less than 60% by mass, more preferably less than 50% by mass, further preferably less than 45% by mass, from the viewpoint of reinforcing property. On the other hand, the content is preferably greater than 1% by mass, more preferably greater than 5% by mass, further preferably greater than 10% by mass, further preferably greater than 20% by mass, further preferably greater than 30% by mass, further preferably greater than 35% by mass, from the viewpoint of the effects of the present invention. Besides, the content of the recovered carbon black in the total content of carbon black may be further lower and may be less than 30% by mass, less than 20% by mass, or less than 10 % by mass, or may be 0% by mass. This is because another member may comprise a recovered carbon black.

<<Content of silica>>

A content of silica when compounded based on 100 parts by mass of the rubber component is, but not particularly limited to, preferably greater than 1 part by mass, preferably greater than 5 parts by mass, more preferably greater than 10 parts by mass, further preferably greater than 20 parts by mass, from the viewpoints of fuel efficiency, wet grip performance, and securement of a sufficient reinforcing property. Moreover, the content is preferably less than 150 parts

by mass, more preferably less than 100 parts by mass, further preferably less than 50 parts by mass, further preferably less than 30 parts by mass, from the viewpoints of dispersibility of silica, processability, and wet grip performance.

<<Content of silane coupling agent>>

A content of a silane coupling agent when compounded based on 100 parts by mass of silica is preferably greater than 1 part by mass, more preferably greater than 3 parts by mass, further preferably greater than 5 parts by mass, further preferably greater than 7 parts by mass. On the other hand, the content is preferably less than 20 parts by mass, more preferably less than 18 parts by mass, further preferably less than 16 parts by mass, further preferably less than 14 parts by mass. When the content is within the above-described ranges, cut resistance tends to be improved.

<<Recovered carbon black>>

In the present invention, a "recovered carbon black" refers to carbon black obtained from a pyrolysis process of a product comprising carbon black such as a used tire and the like, wherein a ratio of a mass of ash (ash content), which is a component that does not combust, is 13% by mass or more when the product is subjected to oxidative combustion by heating in the air, using a thermal weight measurement method according to JIS K 6226-2:2003. The recovered carbon black has much ash content and thus is characterized in that it is less likely to absorb oil. The ash content of the recovered carbon black is preferably 14% by mass or more, more preferably 15% by mass or more, further preferably 16% by mass or more, further preferably 17% by mass or more.

A recovered carbon black can be obtained from a pyrolysis process of a used pneumatic tire. For example, EP 3427975 A refers to "Rubber Chemistry and Technology", vol. 85, No. 3, pp.408-449 (2012), particularly, pages 438, 440, and 442 and describes that a recovered carbon black can be obtained by pyrolysis of an organic material at 550 to 580°C where oxygen is eliminated or by vacuum pyrolysis at a relatively low temperature ([0027]). As described in [0004] of JP 6856781 B, such carbon black obtained by the pyrolysis processes usually lacks a functional group on its surface (A Comparison of Surface Morphology and Chemistry of Pyrolytic Carbon Blacks with Commercial Carbon Blacks, Powder Technology 160 (2005) 190-193).

The recovered carbon black of the present invention may be one that lacks a functional group on its surface or may be one treated so as to include a functional group on its surface. The treatment that the recovered carbon black includes a functional group on its surface can be performed by a usual method. For example, in EP 3173251 A, carbon black obtained from a pyrolysis process is treated with potassium permanganate under an acidic condition, thereby obtaining carbon black including a hydroxyl group and/or a carboxyl group on its surface. Moreover, in JP 6856781 B, carbon black obtained from a pyrolysis process is treated with an amino acid compound including at least one thiol group or disulfide group, thereby obtaining carbon black whose surface is activated. Examples of the recovered carbon black of the present invention also include carbon black treated so as to include a functional group on its surface.

<<Carbon black other than rCB>>

Examples of carbon black other than rCB include, but not particularly limited to, N134, N110, N220, N234, N219, N339, N330, N326, N351, N550, N600, N660, N762, and the like. As a commercially available product, products from ASAHI CARBON CO., LTD., Cabot Japan K.K., TOKAI CARBON CO., LTD., Mitsubishi Chemical Corporation., Lion Corporation., NIPPON STEEL Carbon Co., Ltd., Columbia Carbon Corporation., etc. can be used. These carbon black may be used alone, or two or more thereof may be used in combination.

A nitrogen adsorption specific surface area ($N_2SA$) of carbon black is, but not particularly limited to, preferably greater than 30 $m^2/g$, more preferably greater than 40 $m^2/g$, further preferably greater than 50 $m^2/g$, further preferably greater than 60 $m^2/g$, further preferably greater than 70 $m^2/g$, from the viewpoint that a sufficient reinforcing property and a good abrasion resistance can be obtained. Moreover, the $N_2SA$ is preferably less than 300 $m^2/g$, more preferably less than 200 $m^2/g$, further preferably less than 150 $m^2/g$, further preferably less than 120 $m^2/g$, further preferably less than 110 $m^2/g$, further preferably less than 100 $m^2/g$, further preferably less than 90 $m^2/g$, from the viewpoint that carbon black is excellent in dispersibility and is less likely to generate heat. Besides, the $N_2SA$ of carbon black in the present invention is a value measured according to JIS K 6217-2:2017.

<<Silica>>

As silica, a dry silica (anhydrous silica), a wet silica (hydrous silica), and the like can be used. Among them, the wet silica is preferable for the reason that it has many silanol groups. As commercially available silica, products from Evonik Degussa GmbH, Rhodia Japan Ltd., Tosoh Silica Corporation, Solvay Japan, Ltd., Tokuyama Corporation, etc. can be used. Silica may be used alone, or two or more thereof may be used in combination.

A nitrogen adsorption specific surface area ($N_2SA$) of silica is preferably greater than 50 $m^2/g$, more preferably greater than 100 $m^2/g$, further preferably greater than 150 $m^2/g$, particularly preferably greater than 170 $m^2/g$. Moreover, an upper limit of the $N_2SA$ of silica is, but not particularly limited to, preferably less than 350 $m^2/g$, more preferably less than 250 $m^2/g$, further preferably less than 200 $m^2/g$. When the $N_2SA$ is within the above-described ranges, cut resistance tends to be improved. Besides, the $N_2SA$ of silica is a value measured by a BET method according to ASTM D3037-93.

<<Silane coupling agent>>

In a case where silica is used as a filler, a rubber composition preferably further comprises a silane coupling agent. Examples of the silane coupling agent include, but not particularly limited to, for example, sulfide-based ones such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N, N-dimethylthiocarbamoyl tetrasulfide, 2-triethoxysilylethyl-N, N-dimethylthiocarbamoyl tetrasulfide, 3-triethoxysilylpropyl methacrylate monosulfide, and the like; mercapto-based ones such as 3-mercaptopropyltrimethoxysilane, 2-mercaptoethyltriethoxysilane, NXT and NXT-Z100 manufactured by Momentive Performance Materials, and the like; vinyl-based ones such as vinyltriethoxysilane, vinyltrimethoxysilane, and the like; amino-based ones such as 3-aminopropyltriethoxysilane, 3-aminopropyltrimethoxysilane, and the like; glycidoxy-based ones such as $\gamma$-glycidoxypropyltriethoxysilane, $\gamma$-glycidoxypropyltrimethoxysilane, and the like; nitro-based ones such as 3-nitropropyltrimethoxysilane, 3-nitropropyltriethoxysilane, and the like; and chloro-based ones such as 3-chloropropyltrimethoxysilane, 3-chloropropyltriethoxysilane, and the like. As a commercially available product, products from Evonik Degussa GmbH, Momentive Performance Materials, Shin-Etsu Chemical Co., Ltd., Tokyo Chemical Industry Co, Ltd., AZmax.co, Dow Corning Toray Co., Ltd., etc. can be used. These silane coupling agents may be used alone, or two or more thereof may be used in combination.

<<Other fillers>>

Another filler is not particularly limited, and materials known in the field of the tire industry can be used as another filler. Examples of such another filler include, for example, inorganic fillers such as calcium carbonate, talc, alumina, clay, aluminum hydroxide, aluminum oxide, and mica, and the like. They may be used alone, or two or more thereof may be used in combination.

(Oil)

Oil is not particularly limited, and any of those commonly used in the tire industry can be appropriately used as oil. Examples of oil include, for example, process oils such as paraffinic process oils, aromatic process oils, naphthenic process oils, and the like. Moreover, the examples of oil include process oils for an environmental measure each having a low content of a polycyclic aromatic compound (PCA). Examples of the process oils each having a low content of a PCA include treated distillate aromatic extracts (TDAE) obtained by re-extracting an aromatic process oil, aroma alternative oils that are blended oils of asphalt and naphthenic oil, mild extraction solvates (MES), heavy naphthenic oil, and the like. Among them, the aromatic process oils are preferable, and the TDAE oils are more preferable. As the oil, for example, those manufactured and sold by H&R Group, JXTG Nippon Oil & Energy Corporation, Idemitsu Kosan Co., Ltd., Sankyo Yuka Kogyo K. K., etc., and the like can be used. Oil may be used alone, or two or more thereof may be used in combination.

A content of oil when compounded based on 100 parts by mass of the rubber component is preferably greater than 1 part by mass, more preferably greater than 3 parts by mass, further preferably greater than 5 parts by mass, from the viewpoint of the effects of the present invention. Moreover, the content is preferably less than 20 parts by mass, more preferably less than 15 parts by mass, further preferably less than 10 parts by mass. Besides, the content of oil shall also include an amount of oil contained as an extending oil in a rubber component or oil contained in another component such as sulfur.

(Plasticizing agent other than oil)

A plasticizing agent other than oil can be compounded in the rubber composition. Examples of the plasticizing agent other than oil include resin and an ester-based plasticizing agent, as well as a liquid polymer, a liquid resin, and the like.

(Resin)

A resin is not particularly limited, and any of those commonly used in the rubber industry can be appropriately used as resin, examples of which include, for example, an adhesive resin described below. These resins may be used alone, or two or more thereof may be used in combination.

Softening points of these resins are preferably within a range of temperatures lower than 180°C from the viewpoint that a function as a plasticizing agent is appropriately exhibited. An upper limit of the softening points is preferably lower than 170°C, more preferably lower than 150°C, further preferably lower than 130°C. However, the scope of the "resin" stated here does not include any liquid resins that are in a liquid state at normal temperature (25°C). Besides, in the present specification, a softening point of resin is a temperature at which a sphere drops when the softening point specified in JIS K 6220-1 is measured with a ring and ball softening point measuring device.

(Ester-based plasticizing agent)

An ester-based plasticizing agent is not particularly limited, and as an ester-based plasticizing agent, any of those commonly used in the rubber industry can be appropriately used, examples of which include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. Among them, the DOS and the TOP are preferable due to a balance between a plasticizing effect and abrasion resistance at a low temperature, and the DOS is preferable for the reason that it is excellent in fuel efficiency. The ester-based plasticizing agents may be used alone, or two or more thereof may be used in combination.

(Liquid polymer)

A liquid polymer is a polymer in a liquid state at normal temperature (25°C), examples of which include, for example, a liquid diene-based polymer. Examples of the liquid diene-based polymer include a liquid styrene-butadiene copolymer (liquid SBR), a liquid butadiene polymer (liquid BR), a liquid isoprene polymer (liquid IR), a liquid styrene-isoprene copolymer (liquid SIR), and the like. A number average molecular weight (Mn) of the liquid diene-based polymer, which is measured with a gel permeation chromatography (GPC) and calculated in terms of polystyrene, is preferably greater than 1000, more preferably greater than 3000. On the other hand, the Mn is preferably less than 100000, more preferably less than 15000. A Mn of the liquid polymer is a value measured with a gel permeation chromatography (GPC) and calculated in terms of polystyrene. As a liquid diene-based polymer, for example, products from Sartomer, Kuraray Co., Ltd., etc. can be used. The liquid polymer may be used alone, or two or more thereof may be used in combination.

(Liquid resin)

The liquid resin is a resin in a liquid state at normal temperature (25°C), examples of which include, but not particularly limited to, for example, a liquid aromatic vinyl polymer, a liquid coumarone-indene resin, a liquid indene resin, a liquid terpene resin, a liquid rosin resin, hydrogenated ones thereof, and the like. As a liquid resin, for example, products from Maruzen Petrochemical Co., Ltd., SUMITOMO BAKELITE CO., LTD., YASUHARA CHEMICAL CO., LTD., Tosoh Corporation, RÜTGERS Chemicals GmbH, BASF, Arizona Chemical Company, NITTO Chemical CO., LTD., Nippon Shokubai Co., Ltd., ENEOS Corporation, Arakawa Chemical Industries, Ltd., Taoka Chemical Co., Ltd., etc. can be used. These liquid resins may be used alone, or two or more thereof may be used in combination.

In a case where the rubber composition comprises a plasticizing agent other than oil, a content of the plasticizing agent is preferably an amount within a range satisfying the above-described inequality (5).

(Other compounding agents)

As other compounding agents, resin, an antioxidant, wax, stearic acid, zinc oxide, a vulcanizing agent, a vulcanization accelerator, and the like can be used.

<<Resin>>

Here, resin is a resin that is in a solid state at normal temperature (25°C). Such a resin is not particularly limited, and as such a resin, resin commonly used in the tire industry, such as an aromatic petroleum resin, can be used. Examples of the aromatic petroleum resin include, for example, a phenol-based resin, a coumarone-indene resin, a styrene-based

resin, a terpene-based resin, an acrylic resin, a rosin-based resin, a dicyclopentadiene resin (DCPD resin), and the like. Resin may be used alone, or two or more thereof may be used in combination.

A content of resin when compounded based on 100 parts by mass of the rubber component is preferably greater than 2 parts by mass, more preferably greater than 3 parts by mass, further preferably greater than 4 parts by mass. On the other hand, the content is preferably less than 20 parts by mass, more preferably less than 15 parts by mass, further preferably less than 10 parts by mass.

<<Antioxidant>>

An antioxidant is not particularly limited, and any of those commonly used in the tire industry can be appropriately used. Examples of the antioxidant include, for example, quinoline-based antioxidants, quinone-based antioxidants, phenol-based antioxidants, phenylenediamine-based antioxidants, a carbamic acid metal salt, and the like. Among them, the phenylenediamine-based antioxidants are preferable for the reason that they can better exhibit an effect of improving ozone resistance.

A content of an antioxidant when compounded based on 100 parts by mass of the rubber component is preferably greater than 0.5 parts by mass, more preferably greater than 0.8 parts by mass, further preferably greater than 1.0 parts by mass. On the other hand, the content is preferably less than 7.0 parts by mass, more preferably less than 5.0 parts by mass, further preferably 3.0 parts by mass or less.

<<Wax>>

Wax is not particularly limited, and any of those commonly used in the tire industry can be appropriately used as wax, examples of which include, for example, a petroleum-based wax, a mineral-based wax, a synthetic wax, and the like. Among them, the petroleum-based wax is preferable. Examples of the petroleum-based wax include, for example, a paraffin wax, a microcrystalline wax, a specially selected wax thereof, and the like. Among them, the paraffin wax is preferable. As wax, for example, those manufactured and sold by Ouchi Shinko Chemical Industry Co., Nippon Seiro Co., Ltd., PARAMELT, etc. can be used. Wax may be used alone, or two or more thereof may be used in combination.

A content of wax when compounded based on 100 parts by mass of the rubber component is preferably greater than 0.3 parts by mass, more preferably greater than 0.7 parts by mass, further preferably greater than 1.0 parts by mass. On the other hand, the content is preferably less than 4.0 parts by mass, more preferably less than 3.0 parts by mass, further preferably less than 2.5 parts by mass.

<<Stearic acid>>

A content of stearic acid when compounded based on 100 parts by mass of the rubber component is preferably greater than 0.5 parts by mass, more preferably greater than 0.7 parts by mass, further preferably 1.0 parts by mass or more, from the viewpoint of processability. On the other hand, the content is preferably less than 10 parts by mass, more preferably less than 5 parts by mass, further preferably less than 3 parts by mass, from the viewpoint of vulcanization rate.

<<Zinc oxide>>

A content of zinc oxide when compounded based on 100 parts by mass of the rubber component is preferably greater than 0.5 parts by mass, more preferably greater than 0.7 parts by mass, further preferably greater than 1 part by mass, from the viewpoint of processability. On the other hand, the content is preferably 10 parts by mass or less, more preferably less than 7 parts by mass, further preferably 5 parts by mass or less, from the viewpoint of abrasion resistance.

<<Vulcanizing agent>>

A vulcanizing agent is not particularly limited, and known vulcanizing agents can be used, examples of which include, for example, organic peroxide, a sulfur-based vulcanizing agent, a resin vulcanizing agent, metallic oxide such as magnesium oxide and the like, etc. Among them, the sulfur-based vulcanizing agent is preferable. As the sulfur-based vulcanizing agent, for example, sulfur donors such as sulfur, morpholine disulfide, and the like, etc. can be used. Among them, it is preferable that sulfur is used. The vulcanizing agent can be used alone, or two or more thereof can be used in combination.

Examples of sulfur include a powdery sulfur, a precipitated sulfur, a colloidal sulfur, a surface-treated sulfur (an oil processing sulfur, a special sulfur treated with a dispersing agent, a masterbatch-type sulfur, and the like), an insoluble sulfur (an oil processing insoluble sulfur and the like), and the like, and any of them can be appropriately used. Among them, the powdery sulfur is preferable. As sulfur, for example, those manufactured and sold by Tsurumi Chemical Industry

Co., ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., and the like can be used.

A content of a vulcanizing agent when compounded based on 100 parts by mass of the rubber component is preferably greater than 0.4 parts by mass, more preferably greater than 0.5 parts by mass, further preferably greater than 1.0 parts by mass, further preferably greater than 1.5 parts by mass. On the other hand, the content is preferably less than 6.0 parts by mass, more preferably 5.0 parts by mass or less, further preferably less than 4.0 parts by mass. When the content of the vulcanizing agent is within the above-described ranges, an appropriate reinforcing effect tends to be obtained, and the effects of the present invention tend to be able to be better exhibited. Besides, in a case where the vulcanizing agent includes a component other than sulfur like an oil processing sulfur and the like, the content of the vulcanizing agent means a content of a sulfur component itself.

<<Vulcanization accelerator>>

A vulcanization accelerator is not particularly limited, and known vulcanization accelerators can be used, examples of which include, for example, sulfenamide-based, thiazole-based, thiuram-based, thiourea-based, guanidine-based, dithiocarbamic acid-based, aldehyde-amine-based or aldehydeammonia-based, imidazoline-based, xanthate-based vulcanization accelerators, and the like. Among them, the sulfenamide-based vulcanization accelerator, the thiuram-based vulcanization accelerator, and the guanidine-based vulcanization accelerator are preferable, and the sulfenamide-based vulcanization accelerator is more preferable. As the vulcanization accelerator, for example, those manufactured and sold by Ouchi Shinko Chemical Industry Co., Ltd., Sanshin Chemical Industry Co., Ltd., etc., and the like can be used. These vulcanization accelerators may be used alone, or two or more thereof may be used in combination.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N'-dicyclohexyl-2-benzothiazolyl sulfenamide (DZ), and the like. Examples of the thiuram-based vulcanization accelerator include, for example, tetramethylthiuram monosulfide, tetramethylthiuram disulfide, tetrabenzylthiuram disulfide (TBzTD), and the like. Examples of the guanidine-based vulcanization accelerator include, for example, 1,3-diphenylguanidine (DPG), diorthotrilguanidine, orthotrilbiguanidine, and the like.

A content of a vulcanization accelerator based on 100 parts by mass of the rubber component is preferably greater than 0.3 parts by mass, more preferably greater than 0.4 parts by mass, further preferably greater than 0.5 part by mass. On the other hand, the content is preferably less than 4.0 parts by mass, more preferably less than 3.0 parts by mass, further preferably less than 2.0 parts by mass. When the content of the vulcanization accelerator is within the above-described ranges, breaking strength and elongation tend to be able to be secured, and the effects of the present invention tend to be able to be better exhibited.

<Rubber composition for carcass cord topping rubber>

Each component of a rubber composition for carcass cord topping rubber will be described.

(Rubber component)

A rubber component preferably comprises an IR-based rubber and an SBR. In this case, the rubber component can comprise a rubber component other than IR-based rubbers and SBRs. Moreover, the rubber component may be one consisting of an IR-based rubber and an SBR. Explanation for each component that can constitute the rubber component is as described above in the column "<Rubber composition for sidewall rubbers>".

<<Content>>

A content of an IR-based rubber in 100% by mass of the rubber component is preferably greater than 35% by mass, more preferably greater than 40% by mass, further preferably greater than 50% by mass, further preferably greater than 60% by mass. On the other hand, the content is preferably less than 95% by mass, more preferably less than 90% by mass, further preferably less than 85% by mass, further preferably less than 80% by mass.

Moreover, a content of an SBR in 100% by mass of the rubber component is preferably greater than 5% by mass, more preferably greater than 10% by mass, further preferably greater than 15% by mass, further preferably greater than 20% by mass. On the other hand, the content is preferably less than 60% by mass, more preferably less than 50% by mass, further preferably less than 40% by mass, further preferably less than 35% by mass.

Moreover, a total content of the IR-based rubber and the SBR in 100% by mass of the rubber component is preferably greater than 80% by mass, more preferably greater than 90% by mass, further preferably greater than 95% by mass, or may be 100% by mass.

(Filler)

A filler can comprise a recovered carbon black (rCB). Moreover, the filler can comprise carbon black other than rCB, and silica. In a case where the filler comprises silica, the filler can further comprise a silane coupling agent. The filler can further comprise another filler other than carbon black and silica. Explanation for each component that can constitute the filler is as described above in the column "<Rubber composition for sidewall rubbers>".

<<Content of carbon black>>

A total content of carbon black comprising a recovered carbon black when compounded based on 100 parts by mass of the rubber component is preferably greater than 30 parts by mass, more preferably greater than 40 parts by mass, further preferably greater than 50 parts by mass. On the other hand, the total content is preferably less than 150 parts by mass, more preferably less than 110 parts by mass, further preferably less than 80 parts by mass. When the content of carbon black is within the above-described ranges, a sufficient reinforcing property and a good dispersion in a rubber are obtained, so that a sufficient rubber strength and a sufficient crack growth resistance tend to be obtained.

A content of a recovered carbon black in a total content of carbon black is preferably less than 60% by mass, more preferably less than 50% by mass, further preferably less than 45% by mass, further preferably less than 35% by mass, further preferably less than 25% by mass, from the viewpoint of reinforcing property. On the other hand, the content is preferably greater than 1% by mass, more preferably greater than 5% by mass, further preferably greater than 10% by mass, further preferably greater than 20% by mass, from the viewpoint of the effects of the present invention. Besides, the content of the recovered carbon black in the total content of carbon black may be further lower and may be less than 20% by mass or less than 10 % by mass, or may be 0% by mass. This is because another member may comprise a recovered carbon black.

<<Content of silica>>

A content of silica when compounded based on 100 parts by mass of the rubber component is, but not particularly limited to, preferably greater than 1 part by mass, preferably 5 parts by mass or more, more preferably greater than 10 parts by mass, further preferably greater than 20 parts by mass, from the viewpoints of fuel efficiency, wet grip performance, and securement of a sufficient reinforcing property. Moreover, the content is preferably less than 150 parts by mass, more preferably less than 100 parts by mass, further preferably less than 50 parts by mass, further preferably less than 30 parts by mass, from the viewpoints of dispersibility of silica, processability, and wet grip performance.

<<Content of silane coupling agent>>

The same explanation as the explanation made for the rubber composition for sidewall rubbers can similarly apply to a content of a silane coupling agent when compounded.

(Oil)

The same explanation as the explanation made for the rubber composition for sidewall rubbers can similarly apply to oil.

(Plasticizing agent other than oil)

The same explanation as the explanation made for the rubber composition for sidewall rubbers can similarly apply to a plasticizing agent other than oil as long as the explanation made for the rubber composition for sidewall rubbers does not contradict the explanation of the rubber composition for carcass cord topping rubber.

(Other compounding agents)

The same explanation as the explanation made for the rubber composition for sidewall rubbers can similarly apply to other compounding agents.

<Rubber composition for breaker topping rubber>

Each component of a rubber composition for breaker topping rubber will be described.

(Rubber component)

A rubber component preferably comprises an isoprene-based rubber (IR-based rubber). In this case, the rubber component can comprise a rubber component other than IR-based rubbers. Moreover, the rubber component may be one consisting of an IR-based rubber. Explanation for each component that can constitute the rubber component is as described above in the column "<Rubber composition for sidewall rubbers>".

<<Content>>

A content of an IR-based rubber in 100% by mass of the rubber component is preferably greater than 80% by mass, more preferably greater than 90% by mass, further preferably greater than 95% by mass, or may be 100% by mass.

(Filler)

A filler can comprise a recovered carbon black (rCB). Moreover, the filler can comprise carbon black other than rCB, and silica. In a case where the filler comprises silica, the filler can further comprise a silane coupling agent. The filler can further comprise another filler other than carbon black and silica. Explanation for each component that can constitute the filler is as described above in the column "<Rubber composition for sidewall rubbers>".

<<Content of carbon black>>

A total content of carbon black comprising a recovered carbon black when compounded based on 100 parts by mass of the rubber component is preferably greater than 30 parts by mass, more preferably greater than 35 parts by mass, further preferably greater than 40 parts by mass. On the other hand, the total content is preferably less than 150 parts by mass, more preferably less than 110 parts by mass, further preferably less than 80 parts by mass. When the content of carbon black is within the above-described ranges, a sufficient reinforcing property and a good dispersion in a rubber are obtained, so that a sufficient rubber strength and a sufficient crack growth resistance tend to be obtained.

A content of a recovered carbon black in a total content of carbon black is preferably less than 60% by mass, more preferably less than 50% by mass, further preferably less than 45% by mass, further preferably less than 35% by mass, further preferably less than 25% by mass, from the viewpoint of reinforcing property. On the other hand, the content is preferably greater than 1% by mass, more preferably greater than 5% by mass, further preferably greater than 10% by mass, further preferably greater than 20% by mass, from the viewpoint of the effects of the present invention. Besides, the content of the recovered carbon black in the total content of carbon black may be further lower and may be less than 20% by mass or less than 10 % by mass, or may be 0% by mass. This is because another member may comprise a recovered carbon black.

<<Content of silica>>

A content of silica when compounded based on 100 parts by mass of the rubber component is, but not particularly limited to, preferably greater than 1 part by mass, preferably greater than 5 parts by mass, more preferably 10 parts by mass or more, further preferably greater than 20 parts by mass, from the viewpoints of fuel efficiency, wet grip performance, and securement of a sufficient reinforcing property. Moreover, the content is preferably less than 150 parts by mass, more preferably less than 100 parts by mass, further preferably less than 50 parts by mass, further preferably less than 30 parts by mass, from the viewpoints of dispersibility of silica, processability, and wet grip performance.

<<Content of silane coupling agent>>

The same explanation as the explanation made for the rubber composition for sidewall rubbers can similarly apply to a content of a silane coupling agent when compounded.

(Organic acid cobalt)

The present rubber composition can comprise an organic acid cobalt. Since an organic acid cobalt plays a role in crosslinking between a cord and a rubber, adhesiveness between the cord and the rubber can be improved by compounding this component in the rubber composition. Examples of the organic acid cobalt include, for example, cobalt stearate, cobalt naphthenate, cobalt neodecanoate, cobalt boron 3 neodecanoate, and the like. Among them, cobalt stearate is preferable in that it functions as processing aid (lowers viscosity).

A content of organic acid cobalt based on 100 parts by mass of the rubber component, which is calculated in terms

of cobalt, is preferably greater than 0.05 parts by mass, more preferably greater than 0.08 parts by mass, further preferably greater than 0.09 parts by mass, from the viewpoint of adhesiveness. On the other hand, the content is preferably less than 0.30 parts by mass, more preferably less than 0. 25 parts by mass, further preferably less 0.20 part by mass, from the viewpoint of breaking property of a rubber.

(Thermosetting resin)

The present rubber composition can comprise a thermosetting resin. As a result, adhesiveness between the cord and the rubber can be reinforced. Examples of the thermosetting resin include a cashew oil-modified phenol resin, a resorcinol resin, a modified resorcinol resin, and the like. When the rubber composition comprises at least one of these compounds, an elongation at break and a complex elastic modulus can be improved. The thermosetting resin may be used alone, or two or more thereof may be used in combination.
The cashew oil-modified phenol resin is a resin obtained, for example, by modifying, using cashew oil, a phenol resin that is obtained by reacting phenol with aldehydes such as formaldehyde, acetaldehyde, furfural, and the like using an acid catalyst or an alkali catalyst, and examples of the cashew oil-modified phenol resin include those manufactured by SUMITOMO BAKELITE CO., LTD., and the like. The resorcinol resin is, for example, a resorcinol-formaldehyde condensate or the like, examples of which includes those manufactured by Sumitomo Chemical Industry Company Limited, and the like. The modified resorcinol resin is, for example, one in which a part of a repeating unit of a resorcinol resin is alkylated, examples of which include those manufactured by INDSPEC CHEMICAL CORPORATION, those manufactured by Taoka Chemical Co., Ltd., those manufactured by Uniroyal Chemical Co., those manufactured by Schenectady Chemicals, Inc., those manufactured by Ashland Chemical Company, and the like.
A content of a thermosetting resin when compounded based on 100 parts by mass of the rubber component is preferably greater than 0.5 parts by mass, more preferably greater than 0.7 parts by mass, further preferably greater than 1.2 parts by mass, from the viewpoints of a complex elastic modulus and durability. On the other hand, the content is preferably less than 10 parts by mass, more preferably less than 7 parts by mass, further preferably less than 3 parts by mass, from the viewpoints of fuel efficiency, an elongation at break, processability (sheet rollability), and durability.
A thermoplastic resin can be used in combination with a curing agent, thereby enabling enforcement of adhesiveness between the cord and the rubber. Examples of the curing agent include, but not particularly limited to, partial condensates of hexamethoxymethylolmelamine (HMMM), hexamethylolmelamine pentamethyl ether (HMMPME), and the like. Among them, the partial condensate of hexamethylolmelamine pentamethyl ether (HMMPME) is preferable. The curing agent may be used alone, or two or more thereof may be used in combination.
A content of a curing agent when compounded based on 100 parts by mass of the rubber component is preferably greater than 0.5 parts by mass, more preferably greater than 1.0 parts by mass, further preferably greater than 1.5 parts by mass, from the viewpoint of a complex elastic modulus (E*). On the other hand, the content is preferably less than 5 parts by mass, more preferably less than 3 parts by mass, further preferably less than 2 parts by mass, from the viewpoint of an elongation at break.

(Oil)

The explanation made for the rubber composition for sidewall rubbers can similarly apply to oil.

(Plasticizing agent other than oil)

The explanation made for the rubber composition for sidewall rubbers can similarly apply to a plasticizing agent other than oil as long as the explanation made for the rubber composition for sidewall rubbers does not contradict the explanation of the rubber composition for breaker topping rubber.

(Other compounding agents)

The explanation made for the rubber composition for sidewall rubbers can similarly apply to other compounding agents.

(Organic thiosulfate compound)

In the present rubber composition, an organic thiosulfate compound can be used as a vulcanizing agent in combination with sulfur. The organic thiosulfate compound is not particularly limited, and a compound represented by the following chemical formula (1) and/or a hydrate thereof are preferable as the organic thiosulfate compound.

$$MO_3S\text{-}S\text{-}(CH_2)_q\text{-}S\text{-}SO_3M \qquad (1)$$

(wherein, q represents an integer of 3 to 10, and M are the same or different and represents lithium, potassium, sodium, magnesium, calcium, barium, zinc, nickel, or cobalt.)

In the chemical formula (1), q is preferably an integer of 3 to 6, and M is more preferably potassium or sodium. As a hydrate of a compound represented by the chemical formula (1), for example, sodium salt monohydrate, sodium salt dihydrate, or the like is preferable. As a compound represented by the chemical formula (1) and a hydrate thereof, derivatives derived from sodium thiosulfate, for example, sodium hexamethylene-1,6-bisthiosulfate dihydrate are preferable.

<Rubber composition for inner liner rubber>

Each component of a rubber composition for inner liner rubber will be described.

(Rubber component)

A rubber component composition preferably comprises a butyl-based rubber and an isoprene-based (IR-based rubber). In this case, the rubber component can comprise a rubber component other than butyl-based rubbers and IR-based rubbers. Moreover, the rubber component may be one consisting of a butyl-based rubber and an IR-based rubber.

<<Butyl-based rubber>>

Examples of the butyl-based rubber include a butyl rubber (IIR); a halogenated butyl rubber such as a brominated butyl rubber (Br-IIR) and chlorinated butyl rubber (Cl-IIR); and the like. Among them, a halogenated butyl rubber is preferable and a brominated butyl rubber and a chlorinated butyl rubber are more preferable, from the viewpoint that sheet processability and air barrier property can be improved with good balance. They may be used alone, or two or more thereof may be used in combination.

A usual butyl-based rubber (a butyl-based rubber other than recycled butyl-based rubbers) as well as a recycled butyl-based rubber can be used as a butyl-based rubber in combination. Since a content of a nonhalogenated butyl rubber (regular butyl rubber) in a recycled butyl-based rubber is usually high, a good air barrier property and a good vulcanization rate can be secured by using the recycled butyl rubber in combination with a halogenated butyl rubber. The recycled butyl-based rubbers may be used alone, or two or more thereof may be used in combination.

<<Isoprene-based rubber>>

The explanation made for the rubber composition for sidewall rubbers can similarly apply to an IR-based rubber.

<<Other rubbers>>

The rubber component may comprise another rubber component other than butyl-based rubbers and isoprene-based rubbers. Examples of such another rubber component include, for example, diene-based rubbers such as a butadiene rubber (BR), a styrene-butadiene rubber (SBR), a styrene-isoprene-butadiene rubber (SIBR), a chloroprene rubber (CR), an acrylonitrile-butadiene rubber (NBR), and the like. The explanation made for the rubber composition for sidewall rubbers can similarly apply to these other rubber components. These other rubber components may be used alone, or two or more thereof may be used in combination.

<<Content>>

A content of a butyl-based rubber in 100% by mass of the rubber component is preferably greater than 70% by mass, more preferably greater than 75% by mass, further preferably 80% by mass or more, from the viewpoint of a sufficient air barrier property.

A content of a recycled butyl-based rubber in 100% by mass of the rubber component is preferably greater than 5% by mass, more preferably greater than 8% by mass, further preferably greater than 10% by mass, from the viewpoint of sufficiently bringing out merit of use of the recycled butyl-based rubber. The content is preferably less than 50% by mass, more preferably less than 30% by mass, further preferably less than 20% by mass, from the viewpoints of a sufficient fracture characteristics and vulcanization rate.

A content of an isoprene-based rubber in 100% by mass of the rubber component is preferably less than 25% by mass, more preferably less than 23% by mass, further preferably 20% by mass or less, from the viewpoint of securing a

sufficient air barrier property.

(Filler)

A filler can comprise a recovered carbon black (rCB). Moreover, the filler can comprise carbon black other than rCB, and silica. In a case where the filler comprises silica, the filler can further comprise a silane coupling agent. The filler can further comprise another filler other than carbon black and silica. Explanation for each component that can constitute the filler is as described above in the column "<Rubber composition for sidewall rubbers>".

<<Bituminous coal pulverized product>>

The present rubber composition may further comprise a bituminous coal pulverized product as a filler from the viewpoints of sheet processability and air permeation resistance.

<<Content of carbon black>>

A total content of carbon black comprising a recovered carbon black when compounded based on 100 parts by mass of the rubber component is preferably greater than 30 parts by mass, more preferably greater than 40 parts by mass, further preferably greater than 50 parts by mass. On the other hand, the total content is preferably less than 150 parts by mass, more preferably less than 110 parts by mass, further preferably less than 80 parts by mass. When the content of carbon black is within the above-described ranges, a sufficient reinforcing property and a good dispersion in a rubber are obtained, so that a sufficient rubber strength and a sufficient crack growth resistance tend to be obtained.

A content of recovered carbon black in the total content of carbon black is preferably less than 60% by mass, more preferably less than 50% by mass, further preferably less than 45% by mass, further preferably less than 35% by mass, further preferably less than 25% by mass, from the viewpoint of reinforcing property. On the other hand, the content is preferably greater than 1% by mass, more preferably greater than 5% by mass, further preferably greater than 10% by mass, further preferably greater than 15% by mass, from the viewpoint of the effects of the present invention. Besides, the content of the recovered carbon black in the total content of carbon black may be further lower and may be less than 15% by mass or less than 10% by mass, or may be 0% by mass. This is because another member may comprise a recovered carbon black.

<<Content of silica>>

A content of silica when compounded based on 100 parts by mass of the rubber component is, but not particularly limited to, preferably greater than 1 part by mass, preferably greater than 5 parts by mass, more preferably greater than 10 parts by mass, further preferably greater than 20 parts by mass, from the viewpoints of fuel efficiency, wet grip performance, and securement of a sufficient reinforcing property. Moreover, the content is preferably less than 150 parts by mass, more preferably less than 100 parts by mass, further preferably less than 50 parts by mass, further preferably less than 30 parts by mass, from the viewpoints of dispersibility of silica, processability, and wet grip performance.

<<Content of silane coupling agent>>

The explanation made for the rubber composition for sidewall rubbers can similarly apply to a content of a silane coupling agent when compounded.

<<Content of bituminous coal pulverized product >>

A content of a bituminous coal pulverized product when compounded based on 100 parts by mass of the rubber component is preferably greater than 1 part by mass, more preferably greater than 5 parts by mass, further preferably greater than 10 parts by mass. On the other hand, the content is preferably less than 20 parts by mass, more preferably less than 15 parts by mass, further preferably less than 12 parts by mass.

(Adhesive resin)

The present rubber composition can comprise an adhesive resin. Examples of the adhesive resin include a mixed resin, a nonreactive alkylphenol resin, a C5-based petroleum resin, a coumarone-indene resin, and the like. Among them, a mixed resin is preferably included in the rubber composition for the reason that air barrier property and molding adhesiveness are improved.

A mixed resin refers to a resin obtained by copolymerizing an aromatic hydrocarbon-based structure monomer and an aliphatic hydrocarbon-based structure monomer. Examples of the aromatic hydrocarbon-based structure monomer used for the mixed resin include a monomer having a phenol structure, a coumarone structure, an indene structure, a coumarone-indene structure, and the like, and examples of the aliphatic hydrocarbon-based structure monomer include monomers having structures of aliphatic hydrocarbons such as C2, C3, C5, C8, and C9, and the like. As a mixed resin, those manufactured by STRUKTOL, Rhein Chemie Corp., Flow Polymers Inc., etc. can be used. A nonreactive alkylphenol resin refers to one having an alkyl chain at an ortho position and a para position (particularly a para position) of hydroxyl groups of a benzene ring in a chain and contributing less to a crosslinking reaction during vulcanization, and for example, those manufactured by STRUKTOL, Schenectady, etc. can be used as a nonreactive alkylphenol resin. Examples of the C5-based petroleum resin include those manufactured by Maruzen Petrochemical Co., etc. A coumarone-indene resin is a resin comprising coumarone and indene, and those manufactured by NITTO Chemical CO., LTD., RÜTGERS Chemicals GmbH, etc. can be used as a coumarone-indene resin.

A content of an adhesive resin based on 100 parts by mass of the rubber component when used is preferably greater than 1 part by mass, more preferably greater than 3 parts by mass, further preferably 5 parts by mass or more, from the viewpoints of an air barrier property and molding adhesiveness. On the other hand, the content is preferably less than 30 parts by mass, more preferably less than 20 parts by mass, further preferably less than 10 parts by mass, from the viewpoints of molding adhesiveness and embrittlement resistance at a low temperature.

(Oil)

The explanation made for the rubber composition for sidewall rubbers can similarly apply to oil.

(Plasticizing agent other than oil)

The explanation made for the rubber composition for sidewall rubbers can similarly apply to a plasticizing agent other than oil as long as the explanation made for the rubber composition for sidewall rubbers does not contradict the explanation of the rubber composition for inner liner rubber.

(Other compounding agents)

The explanation made for the rubber composition for sidewall rubbers can similarly apply to other compounding agents.

<Other rubber members constituting tire>

The tire relating to the present invention can comprise another rubber member other than the above-described rubber members. Such another rubber member is not particularly limited, and a variety of such rubber members commonly used for a tire can be used.

In a case where the tire relating to the present invention comprises another rubber member, such another rubber member can comprise oil. The explanation made for the rubber composition for sidewall rubbers can similarly apply to oil.

In a case where the tire relating to the present invention comprises another rubber member, such another rubber member can comprise a plasticizing agent other than oil. The explanation made for the rubber composition for sidewall rubbers can similarly apply to the plasticizing agent other than oil.

<Application>

The tire relating to the present invention can be appropriately used as a pneumatic tire, although the tire may be a pneumatic tire or a non-pneumatic tire. Moreover, the tire of the present invention can be used for various applications, such as a tire for a passenger car, a heavy-duty tire such as for a truck/bus, a motorcycle tire, a high-performance tire, and the like.

< Production methods >

The tire of the present invention can be produced by a known method.

(Production of rubber composition)

First, each rubber composition relating to the tire of the present invention is produced. Each of these rubber

compositions can be produced by a known method. For example, they can be produced by kneading each of the above-described components with a rubber kneading apparatus such as an open roll, a sealed type kneader (a Banbury mixer, a kneader, etc.), and the like. A kneading step includes, for example, a base kneading step of kneading compounding agents and additives other than a vulcanizing agent and a vulcanization accelerator, and a final kneading (F-kneading) step of adding the vulcanizing agent and the vulcanization accelerator to the kneaded product obtained in the base kneading step and kneading them. Additionally, the base kneading step can also be divided into multiple steps as necessary. Examples of a kneading condition include, but not particularly limited to, for example, a method of kneading at a discharge temperature of 150°C to 170°C for 3 to 10 minutes in the base kneading step and kneading at 50°C to 110°C for 1 to 5 minutes in the final kneading step.

(Production of tire)

Each rubber composition obtained as described above is extruded into a shape of each of desired tire members or is once extruded into a shape of a sheet or the like to be used as a topping rubber in a case of the use of the rubber composition as a topping rubber, at an unvulcanized stage, respectively, thereby producing desired tire members. Each tire member thus obtained is molded together with other tire members on a tire forming machine by a usual method, so that an unvulcanized tire can be produced. The tire of the present invention can be obtained by heating and pressurizing (vulcanizing) this unvulcanized tire in a vulcanizing machine. Examples of a vulcanization condition include, but not particularly limited to, for example, a method of vulcanizing at 150 to 200°C for 5 to 30 minutes.

EXAMPLES

Hereinafter, examples considered to be preferable in implementing the present invention (Examples) will be described, though the scope of the present invention is not limited to Examples. Results calculated based on the following evaluation methods considering a tire obtained in accordance with each Table are shown as a durability index in a lower part of each Table.

<Material>

Materials used in Examples and Comparative examples are collectively shown below.

Isoprene-based rubber: NR (TSR20)
BR: Ubepol BR 150B (manufactured by Ube Industries, Ltd., cis content: 97% by mass, Mw: 440000)
SBR: SBR1502 (manufactured by JSR Corporation, styrene content: 23.5% by mass, vinyl content: 18 mol%, Mw: 500000)
Butyl-based rubber: Chlorobutyl HT1066 (product manufactured by Exxon Mobil Corporation, chlorobutyl rubber)
Carbon black 1: SHOW BLACK N330 (manufactured by Cabot Japan K.K., $N_2SA$: 75 $m^2/g$)
Carbon black 2: SHOW BLACK N550 (manufactured by Cabot Japan K.K., $N_2SA$: 42 $m^2/g$)
Carbon black 3: SHOW BLACK N660 (manufactured by Cabot Japan K.K., $N_2SA$: 35 $m^2/g$)
Carbon black 4: SHOW BLACK N326 (manufactured by Cabot Japan K.K., $N_2SA$: 78 $m^2/g$)
Silica: Ultrasil VN3 (manufactured by Evonik Degussa GmbH, $N_2SA$: 175 $m^2/g$)
Bituminous coal pulverized product: Austin Black 325 (manufactured by Coal Fillers Inc., average particle size: 5.5 μm, oil content: 17% by mass, specific gravity: 1.3, $N_2SA$: 9.0 $m^2/g$)
Recovered carbon black (rCB): Carbon black obtained from a pyrolysis process of a tire (ash content: 17% by mass)
Pyrolytic carbon black: Carbon black obtained from a pyrolysis process of a tire (ash content: 10% by mass)
Silane coupling agent: Si266 (manufactured by Evonik Degussa GmbH, bis(3-triethoxysilylpropyl)disulfide)
Organic acid cobalt: Co-STEARATE (manufactured by DIC Corporation, cobalt stearate, cobalt content: 9.5% by mass, stearic-acid content: 90.5% by mass)
Organic thiosulfate compound: DURALINK HTS (manufactured by Flexsys, sodium hexamethylene-1,6-bisthiosulfate dihydrate)
Adhesive resin: STRUKTOL 40MS (manufactured by STRUKTOL, ethylene-propylene-styrene copolymer, content of ethylene propylene: 82% by mass, softening point: 98 to 106°C)
Thermosetting resin 1: SUMIKANOLE 620 (manufactured by Taoka Chemical Co., Ltd., modified resorcinol resin (modified resorcinol-formaldehyde condensate))
Curing agent: SUMIKANOLE 507A (manufactured by Sumitomo Chemical Industry Company Limited, modified etherified methylolmelamine resin (partial condensates of hexamethylolmelamine pentamethyl ether (HMMPME)), which contains 35% by mass of silica and oil)
Oil: VivaTec 400 (manufactured by H&R Group, TDAE oil, Tg: - 58°C)

Wax: OZOACE 0355 (manufactured by Nippon Seiro Co., Ltd., paraffin-based one)
Antioxidant: Antigen 6C (manufactured by Sumitomo Chemical Co., Ltd., N-(1,3-dimethylbutyl)-N'-phenyl-p-phenylenediamine)
Zinc oxide: Zinc oxide No. 2 (manufactured by Mitsui Mining & Smelting Co., Ltd.)
Stearic acid: Bead stearic acid "CAMELLIA" (manufactured by NOF CORPORATION)
Sulfur 1: HK-200-5 (manufactured by Hosoi Chemical Industry Co., Ltd., powdered sulfur, oil content: 5% by mass)
Sulfur 2: Seimi Sulphur (manufactured by Nippon Kanryu Industry Co., Ltd., insoluble sulfur, oil content: 10% by mass)
Sulfur 3: MUCRON OT-20 (manufactured by SHIKOKU CHEMICALS CORPORATION, insoluble sulfur, oil content: 20% by mass)
Sulfur 4: Powdered sulfur manufactured by Tsurumi Chemical Industry Co., ltd. (oil content: 0% by mass)
Vulcanization accelerator 1: Nocceler NS (manufactured by Ouchi Shinko Chemical Industry Co., Ltd., N-tert-butyl-2-benzothiazolyl sulfenamide (TBBS))
Vulcanization accelerator 2: SANTOCURE TBSI manufactured by Flexsys (N-tert-butyl bis(1,3-benzothiazole-2-sulfen) imide)

## [Chemical formula 1]

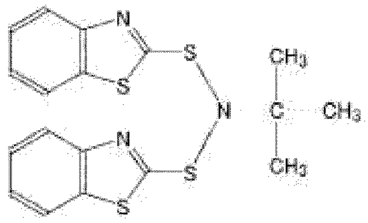

<Rubber composition for sidewall rubbers>

According to the compounding formulations shown in Table 1, using a 1.7 L Banbury mixer manufactured by Kobe Steel, Ltd., chemicals other than sulfur and a vulcanization accelerator are kneaded at a discharge temperature of 150°C for 5 minutes to obtain a kneaded product. Next, the sulfur and the vulcanization accelerator are added to the obtained kneaded product, and the mixture is kneaded using an open roll for 4 minutes until the temperature reaches 105°C, to obtain an unvulcanized rubber composition.

Table 1

(Sidewall)

| | Rubber 1 | Rubber 2 | Rubber 11 | Rubber 12 | Rubber 13 |
|---|---|---|---|---|---|
| Compounding (part by mass) | | | | | |
| Isoprene-based rubber | 40 | 40 | 40 | 40 | 40 |
| BR | 60 | 60 | 60 | 60 | 60 |
| Carbon black 1 | - | 30 | 25 | - | - |
| Carbon black 2 | 55 | - | - | 55 | 55 |
| rCB | - | 22 | 30 | - | - |
| Wax | 2 | 2 | 2 | 2 | 2 |
| Antioxidant | 3 | 3 | 3 | 3 | 3 |
| Zinc oxide | 5 | 5 | 5 | 5 | 5 |
| Stearic acid | 2 | 2 | 2 | 2 | 2 |
| Oil | 7 | 7 | 7 | - | 30 |
| Sulfur 1 | 2 | 2 | 2 | - | 2 |
| Sulfur 4 | - | - | - | 2 | - |
| Vulcanization accelerator 1 | 0.7 | 0.7 | 0.7 | 0.7 | 0.7 |
| Total amount of oil | 7.1 | 7.1 | 7.1 | 0 | 30.1 |
| Amount of rCB | 0 | 22 | 30 | 0 | 0 |

<Rubber composition for carcass cord topping rubber>

According to the compounding formulations shown in Table 2, an unvulcanized rubber composition is obtained by performing a process in the same manner as the case for the rubber composition for sidewall rubbers.

Table 2

(Carcass cord topping)

| | Rubber 3 | Rubber 4 | Rubber 14 | Rubber 15 | Rubber 16 |
|---|---|---|---|---|---|
| Compounding (part by mass) | | | | | |
| Isoprene-based rubber | 70 | 70 | 70 | 70 | 70 |
| SBR | 30 | 30 | 30 | 30 | 30 |
| Carbon black 1 | 35 | 40 | 25 | 35 | 35 |
| Carbon black 3 | 25 | - | - | 25 | 25 |
| rCB | - | 13 | 35 | - | - |
| Silica | 5 | 5 | 5 | 5 | 5 |
| Antioxidant | 1 | 1 | 1 | 1 | 1 |
| Zinc oxide | 5 | 5 | 5 | 5 | 5 |
| Stearic acid | 2 | 2 | 2 | 2 | 2 |
| Oil | 9 | 9 | 9 | - | 70 |
| Sulfur 2 | 2.78 | 2.78 | 2.78 | - | 2.78 |
| Sulfur 4 | - | - | - | 2.78 | - |
| Vulcanization accelerator 1 | 1.5 | 1.5 | 1.5 | 1.5 | 1.5 |
| Total amount of oil | 9.278 | 9.278 | 9.278 | 0 | 70.278 |
| Amount of rCB | 0 | 13 | 35 | 0 | 0 |

<Rubber composition for breaker topping rubber>

According to the compounding formulations shown in Table 3, an unvulcanized rubber composition is obtained by performing a process in the same manner as the case for the rubber composition for sidewall rubbers.

Table 3

(Breaker topping)

| | Rubber 5 | Rubber 6 | Rubber 7 | Rubber 17 | Rubber 18 | Rubber 19 |
|---|---|---|---|---|---|---|
| Compounding (part by mass) | | | | | | |
| Isoprene-based rubber | 100 | 100 | 100 | 100 | 100 | 100 |
| Carbon black 4 | 40 | 38 | 40 | 20 | 40 | 40 |
| Silica | 10 | 10 | 10 | 10 | 10 | 10 |
| rCB | - | 3 | 0.5 | 25 | - | - |
| Cobalt stearate | 1 | 1 | 1 | 1 | 1 | 1 |
| Silane coupling agent | 1 | 1 | 1 | 1 | 1 | 1 |
| Organic thiosulfate compound | 0.5 | 0.5 | 0.5 | 0.5 | 0.5 | 0.5 |
| Thermosetting resin 1 | 1.5 | 1.5 | 1.5 | 1.5 | 1.5 | 1.5 |
| Curing agent | 1.8 | 1.8 | 1.8 | 1.8 | 1.8 | 1.8 |
| Antioxidant | 1 | 1 | 1 | 1 | 1 | 1 |
| Zinc oxide | 10 | 10 | 10 | 10 | 10 | 10 |
| Oil | - | - | - | - | - | 80 |
| Sulfur 3 | 6.25 | 6.25 | 6.25 | 6.25 | - | 6.25 |
| Sulfur 4 | - | - | - | - | 6.25 | - |
| Vulcanization accelerator 2 | 1.3 | 1.3 | 1.3 | 1.3 | 1.3 | 1.3 |
| Total amount of oil | 1.25 | 1.25 | 1.25 | 1.25 | 0 | 81.25 |

(continued)

(Breaker topping)

| | Rubber 5 | Rubber 6 | Rubber 7 | Rubber 17 | Rubber 18 | Rubber 19 |
|---|---|---|---|---|---|---|
| Compounding (part by mass) | | | | | | |
| Amount of rCB | 0 | 3 | 0.5 | 25 | 0 | 0 |

<Rubber composition for inner liner rubber>

According to the compounding formulations shown in Table 4, an unvulcanized rubber composition is obtained by performing a process in the same manner as the case for the rubber composition for sidewall rubbers.

Table 4

(Inner liner)

| | Rubber 8 | Rubber 9 | Rubber 10 | Rubber 20 | Rubber 21 | Rubber 22 |
|---|---|---|---|---|---|---|
| Compounding (part by mass) | | | | | | |
| Butyl-based rubber | 80 | 80 | 80 | 80 | 80 | 80 |
| Isoprene-based rubber | 20 | 20 | 20 | 20 | 20 | 20 |
| Carbon black 3 | 45 | 50 | 50 | 25 | 45 | 45 |
| Bituminous coal pulverized product | 20 | - | - | - | 20 | 20 |
| rCB | - | 10 | - | 35 | - | - |
| Pyrolytic carbon black | - | - | 10 | - | - | - |
| Adhesive resin | 5 | 5 | 5 | 5 | 5 | 5 |
| Zinc oxide | 3 | 3 | 3 | 3 | 3 | 3 |
| Stearic acid | 1 | 1 | 1 | 1 | 1 | 1 |
| Oil | 10 | 10 | 10 | 10 | | 30 |
| Sulfur 1 | 0.5 | 0.5 | 0.5 | 0.5 | - | 0.5 |
| Sulfur 4 | - | - | - | - | 0.5 | - |
| Vulcanization accelerator 1 | 1.3 | 1.3 | 1.3 | 1.3 | 1.3 | 1.3 |
| Total amount of oil | 10.025 | 10.025 | 10.025 | 10.025 | 0 | 30.025 |
| Amount of rCB | 0 | 10 | 0 | 35 | 0 | 0 |

<Tire>

According to the descriptions of Tables 5 and 6, each member of a tire is molded using the above-described unvulcanized rubber composition and attached together with other members to produce an unvulcanized tire, and the unvulcanized tire is press-vulcanized at 170°C for 12 minutes, thereby obtaining a test tire (tire total weight: 8.2 kg).

<Evaluation>

After each test tire is mounted on all wheels of a vehicle (domestic FF passenger vehicle with a displacement of 2000 cc) and is filled with air so that an internal pressure becomes 250 kPa, the vehicle runs 10 laps at a speed of 50 km/h on a test course with a dry road surface in an overloaded state, and then, a motion of the vehicle running onto irregularities provided on the road surface at a speed of 80 km/h is repeated, thereby causing a predetermined damage to each tire. Then, again, the vehicle runs around the test course at a speed of 50 km/h, and then gradually increases the speed, until a driver feels something unusual, a speed at which is measured.

Next, durability is indicated as an index based on the following equation with the result of Comparative example 1 being 100 and is evaluated relatively. The results show that the larger the index is, the more excellent the durability is.

Durability = [(Measurement result of test tire) / (Measurement result of Comparative example 1)] $\times$ 100.

Table 5-1

| | Example | | | | | | | |
|---|---|---|---|---|---|---|---|---|
| | 1 | 2 | 3 | 4 | 5 | 6 | 7 | 8 |
| **Tire** | | | | | | | | |
| Sidewall | Rubber 2 | Rubber 2 | Rubber 1 | Rubber 1 | Rubber 1 | Rubber 2 | Rubber 2 | Rubber 2 |
| Thickness $W_S$ (mm) | 2.5 | 2.5 | 2.5 | 2.5 | 2.5 | 2.5 | 2.5 | 2.5 |
| Carcass | Rubber 4 | Rubber 3 | Rubber 4 | Rubber 3 | Rubber 3 | Rubber 4 | Rubber 3 | Rubber 3 |
| Thickness $W_C$ (mm) | 1.0 | 1.0 | 1.0 | 1.0 | 1.0 | 1.0 | 1.0 | 1.0 |
| Thickness $H_C$ (mm) | 1.0 | 1.0 | 1.0 | 1.0 | 1.0 | 1.0 | 1.0 | 1.0 |
| Breaker | Rubber 6 | Rubber 5 | Rubber 5 | Rubber 6 | Rubber 5 | Rubber 5 | Rubber 6 | Rubber 5 |
| Thickness $H_B$ (mm) | 2.0 | 2.0 | 2.0 | 2.0 | 2.0 | 2.0 | 2.0 | 2.0 |
| Inner liner | Rubber 9 | Rubber 8 | Rubber 8 | Rubber 8 | Rubber 9 | Rubber 8 | Rubber 8 | Rubber 9 |
| Thickness $W_{IL}$ (mm) | 2.0 | 2.0 | 2.0 | 2.0 | 2.0 | 2.0 | 2.0 | 2.0 |
| Thickness $H_{IL}$ (mm) | 2.0 | 2.0 | 2.0 | 2.0 | 2.0 | 2.0 | 2.0 | 2.0 |
| Ash content of rCB (% by mass) | 17 | 17 | 17 | 17 | 17 | 17 | 17 | 17 |
| W ($W_S + W_C + W_{IL}$) | 5.5 | 5.5 | 5.5 | 5.5 | 5.5 | 5.5 | 5.5 | 5.5 |
| H ($H_C + H_B + H_{IL}$) | 5.0 | 5.0 | 5.0 | 5.0 | 5.0 | 5.0 | 5.0 | 5.0 |
| A (g) (rCB) | 331 | 131 | 62 | 27 | 111 | 193 | 158 | 242 |
| B (g) (oil) | 395 | 385 | 389 | 385 | 390 | 390 | 385 | 391 |
| C (g) (filler) | 1011 | 1187 | 1102 | 1178 | 1105 | 1102 | 1178 | 1105 |
| D (g) (plasticizing agent other than oil) | 8 | 8 | 8 | 8 | 8 | 8 | 8 | 8 |
| Inequality (1) $(A/B) \times 100$ | 84 | 34 | 16 | 7 | 28 | 49 | 41 | 62 |
| Inequality (2) $(A/B)/W \times 1000$ | 152 | 62 | 29 | 13 | 52 | 90 | 75 | 113 |
| Inequality (3) $(A/B)/H \times 1000$ | 168 | 68 | 32 | 14 | 57 | 99 | 82 | 124 |
| Inequality (4) $(A/C) \times 100$ | 32.7 | 11.0 | 5.6 | 2.3 | 10.0 | 17.5 | 13.4 | 21.9 |
| Inequality (5) $(A/(A + D)) \times 100$ | 97.6 | 94.2 | 88.6 | 77.1 | 93.3 | 96.0 | 95.2 | 96.8 |
| Durability index | 126 | 109 | 109 | 105 | 103 | 115 | 112 | 118 |

| | Example | | | | | | |
|---|---|---|---|---|---|---|---|
| | 9 | 10 | 11 | 12 | 13 | 14 | 15 |
| **Tire** | | | | | | | |
| Sidewall | Rubber 1 | Rubber 1 | Rubber 1 | Rubber 2 | Rubber 2 | Rubber 2 | Rubber 1 |
| Thickness Ws (mm) | 2.5 | 2.5 | 2.5 | 2.5 | 2.5 | 2.5 | 2.5 |
| Carcass | Rubber 4 | Rubber 4 | Rubber 3 | Rubber 4 | Rubber 4 | Rubber 3 | Rubber 4 |
| Thickness $W_C$ (mm) | 1.0 | 1.0 | 1.0 | 1.0 | 1.0 | 1.0 | 1.0 |
| Thickness He (mm) | 1.0 | 1.0 | 1.0 | 1.0 | 1.0 | 1.0 | 1.0 |

(continued)

| | Example | | | | | | |
|---|---|---|---|---|---|---|---|
| | 9 | 10 | 11 | 12 | 13 | 14 | 15 |
| **Tire** | | | | | | | |
| Breaker | Rubber 6 | Rubber 5 | Rubber 6 | Rubber 6 | Rubber 5 | Rubber 6 | Rubber 6 |
| Thickness $H_B$ (mm) | 2.0 | 2.0 | 2.0 | 2.0 | 2.0 | 2.0 | 2.0 |
| Inner liner | Rubber 8 | Rubber 9 | Rubber 9 | Rubber 8 | Rubber 9 | Rubber 9 | Rubber 9 |
| Thickness $W_{IL}$ (mm) | 2.0 | 2.0 | 2.0 | 2.0 | 2.0 | 2.0 | 2.0 |
| Thickness $H_{IL}$ (mm) | 2.0 | 2.0 | 2.0 | 2.0 | 2.0 | 2.0 | 2.0 |
| Ash content of rCB (% by mass) | 17 | 17 | 17 | 17 | 17 | 17 | 17 |
| W ($W_S$ + $W_C$ + $W_{IL}$) | 5.5 | 5.5 | 5.5 | 5.5 | 5.5 | 5.5 | 5.5 |
| H ($H_C$ + $H_B$ + $H_{IL}$) | 5.0 | 5.0 | 5.0 | 5.0 | 5.0 | 5.0 | 5.0 |
| A (g) (rCB) | 90 | 173 | 138 | 220 | 304 | 269 | 201 |
| B (g) (oil) | 389 | 394 | 390 | 390 | 395 | 391 | 394 |
| C (g) (filler) | 1093 | 1020 | 1096 | 1093 | 1020 | 1096 | 1011 |
| D (g) (plasticizing agent other than oil) | 8 | 8 | 8 | 8 | 8 | 8 | 8 |
| Inequality (1) (A/B) × 100 | 23 | 44 | 35 | 56 | 77 | 69 | 51 |
| Inequality (2) (A/B)/W × 1000 | 42 | 80 | 64 | 103 | 140 | 125 | 93 |
| Inequality (3) (A/B)/H × 1000 | 46 | 88 | 71 | 113 | 154 | 138 | 102 |
| Inequality (4) (A/C) × 100 | 8.2 | 17.0 | 12.6 | 20.1 | 29.8 | 24.5 | 19.9 |
| Inequality (5) (A/(A + D)) × 100 | 91.8 | 95.6 | 94.5 | 96.5 | 97.4 | 97.1 | 96.2 |
| Durability index | 107 | 113 | 111 | 117 | 122 | 120 | 115 |

Table 5-2

| | Example | | | | | | | |
|---|---|---|---|---|---|---|---|---|
| | 15 | 16 | 17 | 18 | 19 | 20 | 21 | 22 |
| **Tire** | | | | | | | | |
| Sidewall | Rubber 2 | Rubber 2 | Rubber 2 | Rubber 2 | Rubber 2 | Rubber 2 | Rubber 2 | Rubber 2 |
| Thickness Ws (mm) | 1.5 | 3.5 | 2.5 | 2.5 | 2.5 | 2.5 | 2.5 | 2.5 |
| Carcass | Rubber 4 | Rubber 4 | Rubber 4 | Rubber 4 | Rubber 4 | Rubber 4 | Rubber 4 | Rubber 4 |
| Thickness $W_C$ (mm) | 1.0 | 1.0 | 0.5 | 2.0 | 1.0 | 1.0 | 1.0 | 1.0 |
| Thickness $H_C$ (mm) | 1.0 | 1.0 | 0.5 | 2.0 | 1.0 | 1.0 | 1.0 | 1.0 |
| Breaker | Rubber 6 | Rubber 6 | Rubber 6 | Rubber 6 | Rubber 6 | Rubber 6 | Rubber 6 | Rubber 6 |
| Thickness $H_B$ (mm) | 2.0 | 2.0 | 2.0 | 2.0 | 1.5 | 4.0 | 2.0 | 2.0 |
| Inner liner | Rubber 9 | Rubber 9 | Rubber 9 | Rubber 9 | Rubber 9 | Rubber 9 | Rubber 9 | Rubber 9 |
| Thickness $W_{IL}$ (mm) | 2.0 | 2.0 | 2.0 | 2.0 | 2.0 | 2.0 | 1.0 | 4.0 |
| Thickness $H_{IL}$ (mm) | 2.0 | 2.0 | 2.0 | 2.0 | 2.0 | 2.0 | 1.0 | 4.0 |

(continued)

| | Example | | | | | | | |
|---|---|---|---|---|---|---|---|---|
| | 15 | 16 | 17 | 18 | 19 | 20 | 21 | 22 |
| **Tire** | | | | | | | | |
| Ash content of rCB (% by mass) | 17 | 17 | 17 | 17 | 17 | 17 | 17 | 17 |
| W ($W_S + W_C + W_{IL}$) | 4.5 | 6.5 | 5.0 | 6.5 | 5.5 | 5.5 | 4.5 | 7.5 |
| H ($H_C + H_B + H_{IL}$) | 5.0 | 5.0 | 4.5 | 6.0 | 4.5 | 7.0 | 4.0 | 7.0 |
| A (g) (rCB) | 279 | 383 | 300 | 393 | 324 | 358 | 276 | 442 |
| B (g) (oil) | 334 | 453 | 378 | 426 | 371 | 493 | 343 | 492 |
| C (g) (filler) | 882 | 1140 | 915 | 1203 | 964 | 1199 | 857 | 1320 |
| D (g) (plasticizing agent other than oil) | 8 | 8 | 8 | 8 | 8 | 8 | 8 | 8 |
| Inequality (1) (A/B) × 100 | 84 | 85 | 79 | 92 | 87 | 73 | 80 | 90 |
| Inequality (2) (A/B)/W × 1000 | 186 | 130 | 159 | 142 | 159 | 132 | 179 | 120 |
| Inequality (3) (A/B)/H × 1000 | 167 | 169 | 176 | 154 | 194 | 104 | 201 | 128 |
| Inequality (4) (A/C) × 100 | 31.6 | 33.6 | 32.8 | 32.7 | 33.6 | 29.9 | 32.2 | 33.5 |
| Inequality (5) (A/(A + D)) × 100 | 97.2 | 98.0 | 97.4 | 98.0 | 97.6 | 97.8 | 97.2 | 98.2 |
| Durability index | 121 | 130 | 124 | 127 | 126 | 127 | 123 | 129 |

Table 5-3

| | Example | | | | | |
|---|---|---|---|---|---|---|
| | 23 | 24 | 25 | 26 | 27 | 28 |
| **Tire** | | | | | | |
| Sidewall | **Rubber 11** | **Rubber 11** | **Rubber 11** | **Rubber 13** | **Rubber 12** | **Rubber 12** |
| Thickness $W_S$ (mm) | **2.5** | **2.5** | **2.5** | **2.5** | **2.5** | **2.5** |
| Carcass | **Rubber 16** | **Rubber 15** | **Rubber 15** | **Rubber 14** | **Rubber 14** | **Rubber 14** |
| Thickness $W_C$ (mm) | **1.0** | **1.0** | **1.0** | **1.0** | **1.0** | **1.0** |
| Thickness $H_C$ (mm) | **1.0** | **1.0** | **1.0** | **1.0** | **1.0** | **1.0** |
| Breaker | **Rubber 18** | **Rubber 19** | **Rubber 18** | **Rubber 18** | **Rubber 19** | **Rubber 18** |
| Thickness $H_B$ (mm) | **2.0** | **2.0** | **2.0** | **2.0** | **2.0** | **2.0** |
| **Inner liner** | **Rubber 21** | **Rubber 21** | **Rubber 22** | **Rubber 21** | **Rubber 21** | **Rubber 22** |
| Thickness $W_{IL}$ (mm) | **2.0** | **2.0** | **2.0** | **2.0** | **2.0** | **2.0** |
| Thickness $H_{IL}$ (mm) | **2.0** | **2.0** | **2.0** | **2.0** | **2.0** | **2.0** |
| Ash content of rCB (% by mass) | **17** | **17** | **17** | **17** | **17** | **17** |
| W ($W_S + W_C + W_{IL}$) | **5.5** | **5.5** | **5.5** | **5.5** | **5.5** | **5.5** |
| H ($He + H_B + H_{IL}$) | **5.0** | **5.0** | **5.0** | **5.0** | **5.0** | **5.0** |
| A (g) (rCB) | **193** | **158** | **242** | **193** | **90** | **173** |
| B (g) (oil) | **390** | **385** | **391** | **390** | **389** | **394** |
| C (g) (filler) | **1102** | **1178** | **1105** | **1102** | **1093** | **1020** |

(continued)

| | Example | | | | | |
|---|---|---|---|---|---|---|
| | 23 | 24 | 25 | 26 | 27 | 28 |
| **Tire** | | | | | | |
| D (g) (plasticizing agent other than oil) | **8** | **8** | **8** | **8** | **8** | **8** |
| Inequality (1) (A/B) × 100 | **49** | **41** | **62** | **49** | **23** | **44** |
| Inequality (2) (A/B)/W × 1000 | **90** | **75** | **113** | **90** | **42** | **80** |
| Inequality (3) (A/B)/H × 1000 | **99** | **82** | **124** | **99** | **46** | **88** |
| Inequality (4) (A/C) × 100 | **17.5** | **13.4** | **21.9** | **17.5** | **8.2** | **17.0** |
| Inequality (5) (A/(A + D)) × 100 | **96.0** | **95.2** | **96.8** | **96.0** | **91.8** | **95.6** |
| Durability index | **113** | **110** | **116** | **113** | **105** | **111** |

| | Example | | | | | |
|---|---|---|---|---|---|---|
| | 29 | 30 | 31 | 32 | 33 | 34 |
| **Tire** | | | | | | |
| Sidewall<br>Thickness Ws (mm) | **Rubber 13**<br>**2.5** | **Rubber 12**<br>**2.5** | **Rubber 12**<br>**2.5** | **Rubber 13**<br>**2.5** | **Rubber 12**<br>**2.5** | **Rubber 12**<br>**2.5** |
| Carcass<br>Thickness $W_C$ (mm)<br>Thickness $H_C$ (mm) | **Rubber 15**<br>**1.0**<br>**1.0** | **Rubber 16**<br>**1.0**<br>**1.0** | **Rubber 15**<br>**1.0**<br>**1.0** | **Rubber 15**<br>**1.0**<br>**1.0** | **Rubber 16**<br>**1.0**<br>**1.0** | **Rubber 15**<br>**1.0**<br>**1.0** |
| Breaker<br>Thickness $H_B$ (mm) | **Rubber 17**<br>**2.0** | **Rubber 17**<br>**2.0** | **Rubber 17**<br>**2.0** | **Rubber 18**<br>**2.0** | **Rubber 18**<br>**2.0** | **Rubber 19**<br>**2.0** |
| **Inner liner**<br>Thickness $W_{IL}$ (mm)<br>Thickness $H_{IL}$ (mm) | **Rubber 21**<br>**2.0**<br>**2.0** | **Rubber 21**<br>**2.0**<br>**2.0** | **Rubber 22**<br>**2.0**<br>**2.0** | **Rubber 20**<br>**2.0**<br>**2.0** | **Rubber 20**<br>**2.0**<br>**2.0** | **Rubber 20**<br>**2.0**<br>**2.0** |
| Ash content of rCB (% by mass) | **17** | **17** | **17** | **17** | **17** | **17** |
| W ($W_S$ + $W_C$ + $W_{IL}$)<br>H (He + $H_B$ + $H_{IL}$)<br>A (g) (rCB)<br>B (g) (oil)<br>C (g) (filler)<br>D (g) (plasticizing agent other than oil) | **5.5**<br>**5.0**<br>**158**<br>**390**<br>**1102**<br>**8** | **5.5**<br>**5.0**<br>**90**<br>**389**<br>**1093**<br>**8** | **5.5**<br>**5.0**<br>**138**<br>**390**<br>**1096**<br>**8** | **5.5**<br>**5.0**<br>**242**<br>**391**<br>**1105**<br>**8** | **5.5**<br>**5.0**<br>**173**<br>**394**<br>**1020**<br>**8** | **5.5**<br>**5.0**<br>**138**<br>**390**<br>**1096**<br>**8** |
| Inequality (1) (A/B) × 100 | **41** | **23** | **35** | **62** | **44** | **35** |
| Inequality (2) (A/B)/W × 1000 | **74** | **42** | **64** | **113** | **80** | **64** |
| Inequality (3) (A/B)/H × 1000 | **81** | **46** | **71** | **124** | **88** | **71** |
| Inequality (4) (A/C) × 100 | **14.3** | **8.2** | **12.6** | **21.9** | **17.0** | **12.6** |
| Inequality (5) (A/(A + D)) × 100 | **95.2** | **91.8** | **94.5** | **96.8** | **95.6** | **94.5** |
| Durability index | **110** | **105** | **109** | **116** | **111** | **109** |

Table 6

| | Comparative example | | |
|---|---|---|---|
| | 1 | 2 | 3 |
| **Tire** | | | |
| Sidewall | **Rubber 1** | **Rubber 1** | **Rubber 1** |
| Thickness $W_S$ (mm) | **2.5** | **2.5** | **2.5** |
| Carcass | **Rubber 3** | **Rubber 3** | **Rubber 3** |
| Thickness $W_C$ (mm) | **1.0** | **1.0** | **1.0** |
| Thickness $H_C$ (mm) | **1.0** | **1.0** | **1.0** |
| Breaker | **Rubber 5** | **Rubber 7** | **Rubber 5** |
| Thickness $H_B$ (mm) | **2.0** | **2.0** | **2.0** |
| **Inner liner** | **Rubber 8** | **Rubber 8** | **Rubber 10** |
| Thickness $W_{IL}$ (mm) | **2.0** | **2.0** | **2.0** |
| Thickness $H_{IL}$ (mm) | **2.0** | **2.0** | **2.0** |
| Ash content of rCB (% by mass) | **-** | **17** | **10** |
| W ($W_S + W_C + W_{IL}$) | **5.5** | **5.5** | **5.5** |
| H ($H_C + H_B + H_{IL}$) | **5.0** | **5.0** | **5.0** |
| A (g) (rCB) | **0** | **5** | **0** |
| B (g) (oil) | **385** | **385** | **385** |
| C (g) (filler) | **1187** | **1180** | **1187** |
| D (g) (plasticizing agent other than oil) | **8** | **8** | **8** |
| Inequality (1) (A/B) × 100 | **0** | **1** | **0** |
| Inequality (2) (A/B)/W × 1000 | **0** | **2** | **0** |
| Inequality (3) (A/B)/H × 1000 | **0** | **3** | **0** |
| Inequality (4) (A/C) × 100 | **0.0** | **0.4** | **0.0** |
| Inequality (5) (A/(A + D)) × 100 | **0.0** | **38.5** | **0.0** |
| Durability index | **100** | **100** | **100** |

<Embodiments>

Preferred embodiments are described below.

[1] A tire comprising

a pair of sidewall rubbers arranged on both sides of a tread part,
a carcass cord topping rubber constituting a carcass that is arranged on the inner sides of the sidewall rubbers in a tire width direction,
a breaker topping rubber constituting a breaker that is arranged on the outer side of the carcass in a tire radial direction and on the inner side of the tread part, and
an inner liner rubber arranged on the inner side of the carcass in the tire radial direction,

wherein at least one rubber selected from the group consisting of the sidewall rubbers, the carcass cord topping rubber, the breaker topping rubber, and the inner liner rubber comprises a recovered carbon black,
wherein at least one rubber member constituting the tire comprises an oil, and
wherein A and B satisfy the following inequality (1), and the right side of the inequality (1) is preferably 5, more preferably 6, further preferably 10, further preferably 30, further preferably 50, further preferably 60,

$$(A/B) \times 100 > 1 \qquad (1),$$

where A represents a total amount, in g, of the recovered carbon black comprised in the sidewall rubbers, the carcass cord topping rubber, the breaker topping rubber, and the inner liner rubber and B represents a total amount, in g, of the oil comprised in the tire.
[2] The tire of [1] above, wherein the right side of the inequality (1) is 5.
[3] The tire of [1] above, wherein the right side of the inequality (1) is 6.
[4] The tire of any one of [1] to [3] above, wherein A, B, and W satisfy the following inequality (2), and the right side of the inequality (2) is preferably 10, more preferably 13, further preferably 15, further preferably 30, further preferably 50, further preferably 70,

$$(A/B)/W \times 1000 > 5 \quad (2),$$

where W represents a total thickness, in mm, of the sidewall rubber, the carcass cord topping rubber, and the inner liner rubber at a position at which a width of the tire becomes maximum in a tire rotation axis direction.
[5] The tire of any one of [1] to [4] above, wherein A, B, and H satisfy the following inequality (3), and the right side of the inequality (3) is preferably 12, more preferably 14, further preferably 18, further preferably 36, further preferably 50, further preferably 70, further preferably 90, further preferably 100,

$$(A/B)/H \times 1000 > 6 \quad (3),$$

where H represents a total thickness, in mm, of the breaker topping rubber, the carcass cord topping rubber, and the inner liner rubber at a position on a tire equatorial plane.
[6] The tire of any one of [1] to [5] above, wherein the at least one rubber comprising the recovered carbon black comprises the oil as well.
[7] The tire of any one of [1] to [6] above, wherein the at least one rubber comprising the recovered carbon black is a carcass cord topping rubber.
[8] The tire of any one of [1] to [7] above, wherein a rubber comprising the recovered carbon black is at least two rubbers selected from the group consisting of the sidewall rubbers, the carcass cord topping rubber, the breaker topping rubber, and the inner liner rubber.
[9] The tire of any one of [1] to [7] above, wherein a rubber comprising the recovered carbon black is at least three rubbers selected from the group consisting of the sidewall rubbers, the carcass cord topping rubber, the breaker topping rubber, and the inner liner rubber.
[10] The tire of any one of [1] to [7] above, wherein a rubber comprising the recovered carbon black is all of the sidewall rubbers, the carcass cord topping rubber, the breaker topping rubber, and the inner liner rubber.
[11] The tire of any one of [1] to [10] above, wherein a rubber comprising the oil is at least two rubbers selected from the group consisting of the sidewall rubbers, the carcass cord topping rubber, the breaker topping rubber, and the inner liner rubber.
[12] The tire of any one of [1] to [10] above, wherein a rubber comprising the oil is at least three rubbers selected from the group consisting of the sidewall rubbers, the carcass cord topping rubber, the breaker topping rubber, and the inner liner rubber.
[13] The tire of any one of [1] to [10] above, wherein a rubber comprising the oil is all of the sidewall rubbers, the carcass cord topping rubber, the breaker topping rubber, and the inner liner rubber.
[14] The tire of any one of [1] to [13] above,

wherein at least one rubber selected from the group consisting of the sidewall rubbers, the carcass cord toping rubber, the breaker topping rubber, and the inner liner rubber comprises a filler, and
wherein, A and C satisfy the following inequality (4), and the right side of the inequality (4) is preferably 2.0, more preferably 2.2, further preferably 8.0,

$$(A/C) \times 100 > 1.0 \quad (4),$$

where C represents a total amount, in g, of fillers comprised in the sidewall rubbers, the carcass cord toping rubber, the breaker topping rubber, and the inner liner rubber.
[15] The tire of any one of [1] to [14] above,

wherein the at least one rubber member constituting the tire comprises a plasticizing agent other than the oil, and
wherein A and D satisfy the following inequality (5), and the right side of the inequality (5) is preferably 30.0, more

preferably 50.0, further preferably 70.0. further preferably 80.0, further preferably 90.0,

$$A/(A + D) \times 100 > 16.0 \quad (5),$$

where D represents a total amount, in g, of plasticizing agents other than the oil which are comprised in the tire.

REFERENCE SIGNS LIST

1 Tire
2 Tread part
3 Sidewall rubber
4 Carcass cord topping rubber
5 Breaker topping rubber
6 Inner liner rubber
W Total thickness of a sidewall rubber, a carcass cord topping rubber, and an inner liner rubber at a position of a tire maximum width
H Total thickness of a breaker topping rubber, a carcass cord topping rubber, and an inner liner rubber at a position on a tire equatorial plane
EP Tire equatorial plane

## Claims

**1.** A tire comprising

a pair of sidewall rubbers arranged on both sides of a tread part,
a carcass cord topping rubber constituting a carcass that is arranged on the inner sides of the sidewall rubbers in a tire width direction,
a breaker topping rubber constituting a breaker that is arranged on the outer side of the carcass in a tire radial direction and on the inner side of the tread part, and
an inner liner rubber arranged on the inner side of the carcass in the tire radial direction,
wherein at least one rubber selected from the group consisting of the sidewall rubbers, the carcass cord topping rubber, the breaker topping rubber, and the inner liner rubber comprises a recovered carbon black,
wherein at least one rubber member constituting the tire comprises an oil, and
wherein A and B satisfy the following inequality (1),

$$(A/B) \times 100 > 1 \quad (1),$$

where A represents a total amount, in g, of the recovered carbon black comprised in the sidewall rubbers, the carcass cord topping rubber, the breaker topping rubber, and the inner liner rubber and B represents a total amount, in g, of the oil comprised in the tire.

**2.** The tire of claim 1, wherein the right side of the inequality (1) is 5.

**3.** The tire of claim 1, wherein the right side of the inequality (1) is 6.

**4.** The tire of any one of claims 1 to 3, wherein A, B, and W satisfy the following inequality (2),

$$(A/B)/W \times 1000 > 5 \quad (2),$$

where W represents a total thickness, in mm, of the sidewall rubber, the carcass cord topping rubber, and the inner liner rubber at a position at which a width of the tire becomes maximum in a tire rotation axis direction.

**5.** The tire of any one of claims 1 to 4, wherein A, B, and H satisfy the following inequality (3),

$$(A/B)/H \times 1000 > 6 \quad (3),$$

where H represents a total thickness, in mm, of the breaker topping rubber, the carcass cord topping rubber, and the inner liner rubber at a position on a tire equatorial plane.

**6.** The tire of any one of claims 1 to 5, wherein the at least one rubber comprising the recovered carbon black comprises the oil as well.

**7.** The tire of any one of claims 1 to 6, wherein the at least one rubber comprising the recovered carbon black is a carcass cord topping rubber.

**8.** The tire of any one of claims 1 to 7, wherein a rubber comprising the recovered carbon black is at least two rubbers selected from the group consisting of the sidewall rubbers, the carcass cord topping rubber, the breaker topping rubber, and the inner liner rubber.

**9.** The tire of any one of claims 1 to 7, wherein a rubber comprising the recovered carbon black is at least three rubbers selected from the group consisting of the sidewall rubbers, the carcass cord topping rubber, the breaker topping rubber, and the inner liner rubber.

**10.** The tire of any one of claims 1 to 7, wherein a rubber comprising the recovered carbon black is all of the sidewall rubbers, the carcass cord topping rubber, the breaker topping rubber, and the inner liner rubber.

**11.** The tire of any one of claims 1 to 10, wherein a rubber comprising the oil is at least two rubbers selected from the group consisting of the sidewall rubbers, the carcass cord topping rubber, the breaker topping rubber, and the inner liner rubber.

**12.** The tire of any one of claims 1 to 10, wherein a rubber comprising the oil is at least three rubbers selected from the group consisting of the sidewall rubbers, the carcass cord topping rubber, the breaker topping rubber, and the inner liner rubber.

**13.** The tire of any one of claims 1 to 10, wherein a rubber comprising the oil is all of the sidewall rubbers, the carcass cord topping rubber, the breaker topping rubber, and the inner liner rubber.

**14.** The tire of any one of claims 1 to 13,

wherein at least one rubber selected from the group consisting of the sidewall rubbers, the carcass cord toping rubber, the breaker topping rubber, and the inner liner rubber comprises a filler, and
wherein, A and C satisfy the following inequality (4),

$$(A/C) \times 100 > 1.0 \quad (4),$$

where C represents a total amount, in g, of fillers comprised in the sidewall rubbers, the carcass cord toping rubber, the breaker topping rubber, and the inner liner rubber.

**15.** The tire of any one of claims 1 to 14,

wherein the at least one rubber member constituting the tire comprises a plasticizing agent other than the oil, and
wherein A and D satisfy the following inequality (5),

$$A/(A + D) \times 100 > 16.0 \quad (5),$$

where D represents a total amount, in g, of plasticizing agents other than the oil which are comprised in the tire.

FIG. 1

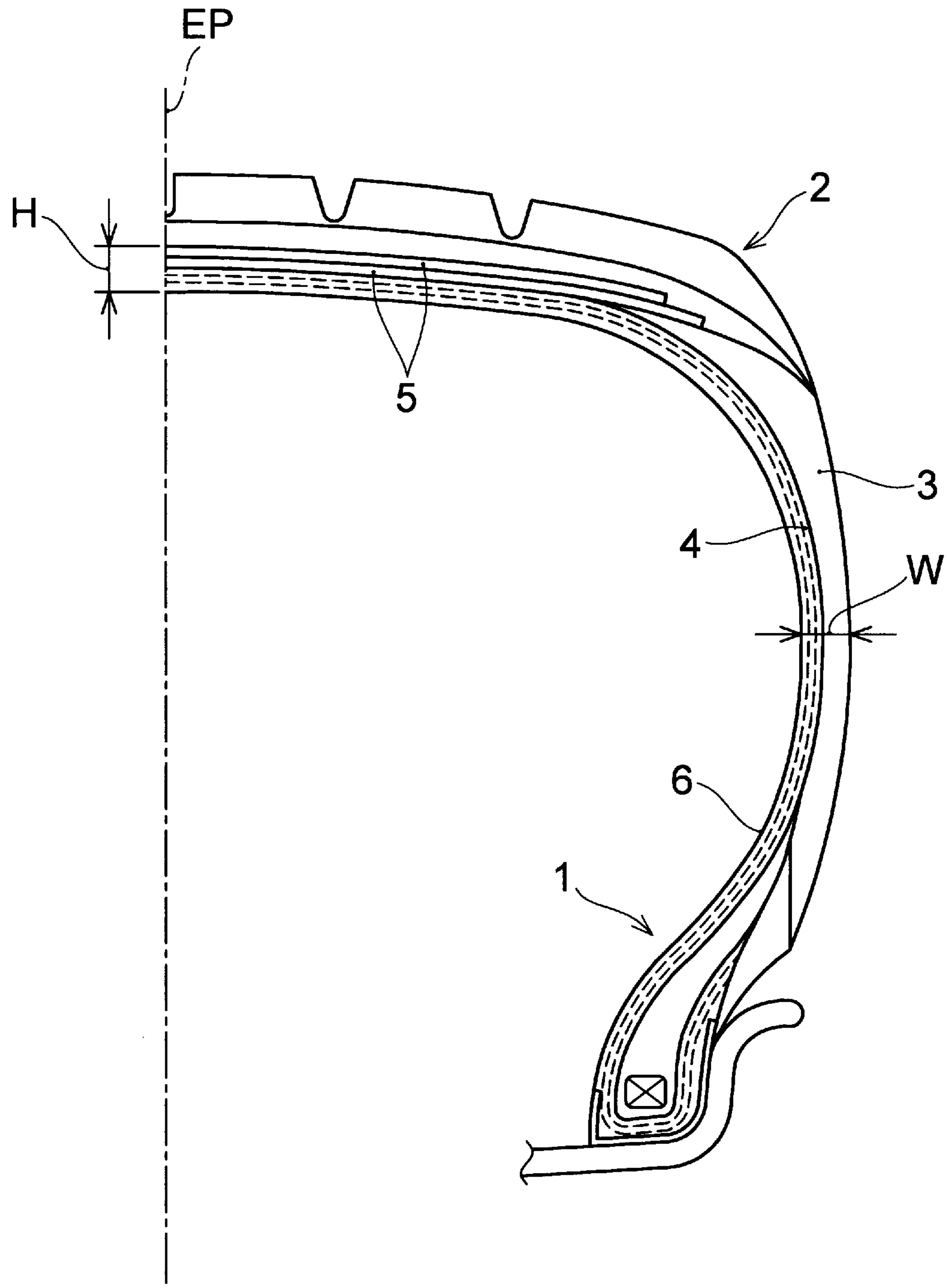

## INTERNATIONAL SEARCH REPORT

International application No. **PCT/JP2023/022804**

**A. CLASSIFICATION OF SUBJECT MATTER**

***B60C 1/00***(2006.01)i; ***B60C 5/14***(2006.01)i
FI: B60C1/00 B; B60C1/00 C; B60C5/14 A

According to International Patent Classification (IPC) or to both national classification and IPC

**B. FIELDS SEARCHED**

Minimum documentation searched (classification system followed by classification symbols)

B60C1/00-19/12, C08K3/00-13/08, C08L1/00-101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-523456 A (BRIDGESTONE CORPORATION) 06 August 2020 (2020-08-06) entire text | 1-15 |
| A | US 2018/0009971 A1 (BRIDGESTONE AMERICAS TIRE OPERATIONS, LLC) 11 January 2018 (2018-01-11) entire text | 1-15 |
| A | JP 2022-52896 A (TOYO TIRE CORP) 05 April 2022 (2022-04-05) entire text | 1-15 |
| A | JP 2012-521443 A (RIPP RESOURCE RECOVERY CORPORATION) 13 September 2012 (2012-09-13) entire text | 1-15 |
| P, A | WO 2022/202698 A1 (YOKOHAMA RUBBER CO LTD) 29 September 2022 (2022-09-29) entire text | 1-15 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 September 2023** | **19 September 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/022804**

| Patent document cited in search report | Publication date (day/month/year) | Patent family member(s) | Publication date (day/month/year) |
|---|---|---|---|
| JP 2020-523456 A | 06 August 2020 | US 2020/0189318 A1 | |
| | | WO 2019/002437 A1 | |
| | | EP 3645621 A1 | |
| | | CN 110832024 A | |
| US 2018/0009971 A1 | 11 January 2018 | WO 2016/105932 A1 | |
| | | EP 3237530 A1 | |
| | | CN 107108966 A | |
| JP 2022-52896 A | 05 April 2022 | US 2022/0089833 A1 | |
| JP 2012-521443 A | 13 September 2012 | US 2010/0249353 A1 | |
| | | WO 2010/108258 A1 | |
| | | EP 2411327 A1 | |
| | | CA 2689855 A | |
| | | CN 102361818 A | |
| WO 2022/202698 A1 | 29 September 2022 | JP 2022-146475 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3173251 A
- EP 3427975 A
- JP 6856781 B


### Non-patent literature cited in the description


- *Rubber Chemistry and Technology*, 2012, vol. 85 (3), 408-449
- A Comparison of Surface Morphology and Chemistry of Pyrolytic Carbon Blacks with Commercial Carbon Blacks. *Powder Technology*, 2005, vol. 160, 190-193